# EUROPEAN PATENT APPLICATION

(11) **EP 3 712 190 A1**
(43) Date of publication of application: **23.09.2020**
(21) Application number: 19163580.4
(22) Date of filing: 18.03.2019
(51) Int. Cl.: C08G 18/48, C08G 18/67, C08G 18/75, C08G 18/76, C08G 18/10, C08G 18/12, C08G 18/28, C09D 175/06, C09D 175/08, C08G 18/42, C08G 18/66, C08G 18/72, C08G 18/08, C09D 175/16, C08G 18/32, C08G 18/34, C08L 75/16

(54) **BINDER FOR AN AQUEOUS COATING COMPOSITION**

(71) Applicant: ALLNEX AUSTRIA GmbH, 8402 Werndorf (AT)
(72) Inventor: TEMEL, Armin, 8042 Graz - St. Peter (AT); LUNZER, Florian, 8010 Graz (AT); POTZMANN, Robert, 1000 Brussels (BE); BRINKHUIS, Richard Hendrikus Gerrit, 8011 JX Zwolle (NL)
(74) Representative: Destryker, Elise Martine

(57) **Abstract**

The invention relates to an aqueous polymer dispersion wherein the dispersed polymer **U** comprises Michael donor groups, and is an externally emulsified polymer **UE** or a self-emulsifying polymer **US,** wherein the Michael donor groups are acidic C-H groups from activated methylene and/or methine groups, to a mixture thereof with compounds having Michael acceptor groups which are activated olefinically unsaturated groups, activated by an electron-withdrawing group, and a catalyst to promote the Michael reaction, to a paint binder prepared from the mixture and the catalyst, and to coating compositions comprising the paint binder and appropriate additives.

## Description

### Field of the Invention

The invention relates an aqueous oligomer or polymer dispersion wherein the dispersed oligomer or polymer comprises an average of at least two Michael donor groups in an oligomer or polymer molecule, and is an externally emulsified oligomer or polymer or a self-emulsifying oligomer or polymer which comprises incorporated moieties that have pending hydrophilic groups, or hydrophilic groups which form part of the oligomer or polymer chain, wherein the Michael donor groups are acidic C-H groups from activated methylene >CH₂ and/or methine ≡ CH groups, also referred to by the IUPAC systematic name as "methylidene" for the former, and "methylylidene" or "methanylylidene" for the latter. The invention also relates to a process for the preparation of the said aqueous oligomer or polymer dispersion which has an average of at least two Michael donor groups in an oligomer or polymer molecule, and to a binder for an aqueous coating composition comprising as a first component, the said aqueous oligomer or polymer dispersion which has an average of at least two Michael donor groups in an oligomer or polymer molecule, and a second component hereinafter referred to as "Michael acceptor" which is at least one organic compound having at least two activated olefinically unsaturated groups, wherein activation of the unsaturated group is effected by at least one electronegative group 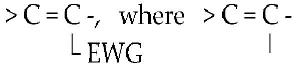 is one of the olefinically unsaturated groups, and "EWG" stands for "Electron-Withdrawing Group", the symbol ">" stands for two single bonds on the same carbon atom, the symbol "-" or "|" or "└" stands for one single bond on a carbon atom, and the symbol "=" stands for a double bond between two neighbouring carbon atoms. In the coating composition of the invention, the Michael donor is a water-dispersible oligomer or polymer, or both the Michael donor and the Michael acceptor are water-dispersible oligomers or polymers, or both Michael donor groups and Michael acceptor groups are present in a water-dispersible oligomer or polymer. The invention also relates to a coating composition comprising a non-polymeric and non-oligomeric Michael donor component which has an average of at least two Michael donor groups in its molecule, and as a second component, an aqueous dispersion of an oligomeric or polymeric Michael acceptor component, wherein the dispersed oligomer or polymer comprises an average of at least two Michael acceptor groups in an oligomer or polymer molecule, and is an externally emulsified oligomer or polymer or a self-emulsifying oligomer or polymer which comprises incorporated moieties that have pending hydrophilic groups, or hydrophilic groups which form part of the oligomer or polymer chain.

### Background of the Invention

Binders for coating compositions comprising Michael donor and Michael acceptor components which are cured by a Michael addition reaction between donor and acceptor have already been described in the past, such as by Noomen in Progress in Organic Coatings, vol. 32 (1997), pages 137 to 142. Coating compositions are disclosed therein which are based on a first system which comprises a malonate functional polyester resin, synthesised from pentanediol and diethylmalonate, with an "equivalent weight: 195", the reaction product of 1 mol of the triisocyanurate of isophorone diisocyanate and 3 mol of hydroxybutyl acrylate, which system is catalysed with 1,8-diaza-bicyclo[5,4,0]undec-7-ene (DBU), see section 2.1; a second system which comprises the said malonate polyester in combination with an unsaturated urethane acrylate, catalysed with DBU, see section 2.2; and a third system which comprises the said malonate polyester in com-bination with the reaction product of 1 mol of isophoronediisocyanate and 2 mol of hydroxy-butyl acrylate, catalysed with DBU, see section 2.3. A comparison has shown that the Michael addition-based coating showed much better retention of gloss and flexibility than a conventional alkyd-based coating. A problem, however, was seen in the fact that the decorative coatings market was not supposed to accept two-pack products with a limited potlife for these applications.

An aqueous two-pack system which is curable by Michael addition under formation of carbon-carbon bonds has been disclosed in US 5,567,761 A. Ambient-temperature-curable aqueous polymer systems are disclosed therein, comprising: (A) an acetoacetylated polymer; and (B) a polyacrylate containing at least two (meth)acrylate end groups, in the form of an aqueous solution, suspension, or emulsion, wherein said acetoacetylated polymer is a water-dispersible acetoacetylated acrylic resin obtained by solution copolymerisation of a mass fraction of from 10 % to 60 % of a (meth)acrylic monomer (M1) having the formula

CH₂=C(R¹)-C(O)-O-R²-O-C(O)-CH₂-C(O)-CH₃ (M1),

wherein R¹ is -H or -CH₃ and R² is a linear or branched saturated C₁- to C₄- alkylene group, a mass fraction of from 1 % to 15 % of a carboxyl vinyl monomer (M2), and a mass fraction of from 25 % to 89 % of a copolymerisable vinyl monomer (M3) selected from the group consisting of C₁- to C₄-alkyl (meth)acrylate, and styrene. A further embodiment claimed in claim 10 is an ambient-temperature curable composition, comprising: (A) a compound containing at least two acetoacetate methylene groups; (B) a compound containing at least two acrylate alkene groups; (C) a compound containing at least two epoxy groups; and (D) a Michael reaction catalyst base. Systems are disclosed which comprise an acetoacetylated polymer (A) in the form of an acrylic water-dispersible resin or an acrylic latex, and a polyacrylate having at least two (meth)acrylate end groups. The acetoacetylated acrylic water-dispersible resins are made by copolymerisation of a monomer mixture comprising mass fractions of from 10 % to 60 % of an acetoacetylated (meth)acrylate monomer, from 1 % to 15 % of a hydrophilic vinyl monomer, and from 25 % to 89 % of other copolymerisable vinyl monomers, and the acetoacetylated acrylic latices are made by emulsion polymerisation of these monomers as stated supra. The polyacrylate having at least two (meth)acrylate end groups used as crosslinker is preferably a NCO-free water dispersible urethane polyacrylate resin. They are prepared by a two-stage process wherein a water-dispersible NCO-terminated prepolymer is formed in the first stage by reacting an excess of a polyisocyanate with an hydrophilic NCO-reactive compound which can impart the desired water dispersibility and/or a further NCO-reactive compound other than the hydrophilic compound mentioned supra. The NCO-terminated prepolymer is then capped with (meth)acrylate functionality by reacting with a NCO-reactive (meth)acrylate in a second stage. Suitable catalysts used are bases having a *p*Kₐ of from 12 to 14, such as 1,8-diazabicyclo[5,4,0]undecene-7 (DBU), 1,5-diazabicyclo[4,3,0]nonene-5 (DBN), 1,1,3,3-tetramethylguanidine (TMGD), 1,4-dihydropyridines, 2-allyl-N-alkyl imidazolines, tetra-t-butylammonium hydroxide, potassium methoxide, sodium hydroxide, and potassium hydroxide. Other possible crosslinkers are mentioned which include low molar mass polymalonates useful as curing agents include trimethylolpropane tri(ethyl malonate) which can be prepared by transesterification of trimethylolpropane with diethyl malonate. High molar mass polymalonates include malonated polyesters obtained by condensation polymerisation of malonic acids with glycols and other dibasic acids.

Extension of potlife of Michael addition curable systems had been possible by using certain carboxylic acids as blocking agents for the basic catalysts, as described in EP 0 448 154 A1, but temperatures of at least 80 °C were needed for curing, in order to decompose the carboxylic acids used, or to remove them by distilling off the free acid, and thereby shift the equilibrium until all or most of the blocked catalysts were unblocked.

A breakthrough had been achieved with the introduction of a latent base catalyst which is a carbonate salt which decomposes upon drying under release of carbon dioxide to form a strong base, as disclosed in EP 2 556 108 B1. This chemistry has, however, only been applied to solvent based or bulk liquid resins.

A water-borne coating composition comprising a vinyl polymer having acetoacetate functional groups and a polyalkyleneimine as stabiliser against gelling, optionally, crosslinkers such as trimethylol propane tri(meth)acrylate, 1,6-hexanediol di(meth)acrylate, and allyl acrylate, together with an anionic surfactant which is added after polymerisation, has been described in WO 1999/014 278 A1, corresponding to US 6,201,048 B1.

A main concern in low temperature curing systems is the mobility of the components which carry the groups responsible for the curing reaction. This mobility is restricted during the film formation and vitrification of the coating film during the first stage of crosslinking. Further crosslinking can be enhanced by keeping the reactive groups in near neighbourhood. This can be done, e. g., by including both kinds of reactive groups in the same emulsified droplet, or even in the same polymer chain. An extended potlife together with rapid curing after application is therefore desired.

### Object of the Invention

It has therefore been the object of the invention to provide a water-borne coating composition that has long potlife, and accelerated curing speed after application and initial film formation.

### Summary of the Invention

These requirements were fulfilled by providing combinations of Michael donor components and Michael acceptor components capable of being emulsified in water, aqueous coating compositions comprising these Michael donor components and Michael acceptor components, suitable means for emulsifying at least one of these components which include addition of an emulsifier, referred to as "external emulsification", to either or both of the Michael donor components and Michael acceptor components, and hydrophilic modification, referred to as "self-emulsification", of either or both of the Michael donor components and Michael acceptor components, suitable catalysts for facilitating the Michael addition reaction, and suitable additives, fillers, and auxiliaries for these coating compositions.

The Michael reaction is a nucleophilic addition of a carbanion (or another nucleophile) to an alpha,beta-unsaturated compound bearing electron-withdrawing groups, which unsaturated compound is referred to as Michael acceptor. A Michael donor component that forms the nucleophile by deprotonation in the context of the present invention, is an organic molecule which has at least one acidic C-H group which is a C-H group in activated methylene >CH₂ group with a carbon atom attached to two further atoms which are not hydrogen, and methine ≡CH groups with a carbon atom attached to three further atoms which are not hydrogen, where at least one of the substituents is an electronegative substituent stabilising the carbanion, such as carboxyl groups, carbonyl groups, nitro groups, and cyano groups.

According to the invention, an aqueous polymer dispersion is provided as Michael donor component wherein the dispersed polymer **U** comprises Michael donor groups, and is
- an externally emulsified polymer **UE** which preferably comprises in its polymer chain, ester groups or urethane groups, or both, as parts of the repeating units, and preferably has a number average molar mass of at least 500 g/mol,
   wherein the dispersion also comprises at least one emulsifier which is a non-ionic emulsifier or an anionic emulsifier, or a combination of at least one non-ionic emulsifier and at least one anionic emulsifier, or
- a self-emulsifying polymer **US** which preferably comprises in its polymer chain, ester groups or urethane groups, or both, as parts of the repeating units, and further preferably has a number average molar mass of at least 500 g/mol, and incorporated moieties that have pending hydrophilic groups, or hydrophilic groups which form part of the polymer chain,
wherein the Michael donor groups are acidic C-H groups from activated methylene and/or methine groups, the carbon atom of the acidic C-H group being attached to at least one electronegative substituent, or electron-withdrawing group, such as carboxyl groups, carbonyl groups, and cyano groups, wherein the polymer **U** (i. e., any of **UE** and **US**) comprises, on average, at least two acidic C-H groups per molecule, and wherein the specific amount of substance of acidic C-H groups in the polymer **U** is preferably at least 0.5 mol/kg.

A repeating unit, in the context of the present invention, is a part of a polymer whose repetition would produce at least a part of the complete polymer chain, except for the end groups, by linking the repeating units together successively along the polymer chain.

### Detailed Disclosure of the Preferred Embodiments

### The Michael Donor Component

In a first embodiment, the externally emulsified polymer **UE** comprises, in its polymer chain, moieties derived from a monomeric, oligomeric, or polymeric hydroxy-functional component **B** having at least one acidic C-H group, and moieties derived from a monomeric, oligomeric, or polymeric component **D** which is either an acid-functional component **Da,** or an isocyanate-functional component **Di.** The externally emulsified polymer **UE** comprises ester groups or urethane groups as repeating units, when using **Da** or **Di** as component **D.**

In a second embodiment, the externally emulsified polymer **UE** comprises, in its polymer chain, moieties derived from an at least difunctional acid **Ba** having at least one acidic C-H group, and moieties derived from a monomeric, oligomeric, or polymeric hydroxyfunctional component **Dh** which is a hydroxy-functional component **Bh** as explained infra. The externally emulsified polymer **UE** comprises ester groups as repeating units, when using **Bh** as component **D.**

In the first embodiment, the externally emulsified polymer **UE** can be made by reacting a hydroxy-functional component **B** having, on average, at least one acidic C-H group per molecule as Michael donor, and at least two hydroxyl groups per molecule, and an at least difunctional component **D** which is either an acid-functional component **Da,** or an isocyanate-functional component **Di,** that react with hydroxyl groups of component **B** by collective or consecutive or mixed reaction, under polyaddition to form a polyurethane, or under polycondensation to form a polyester.

In the second embodiment, the externally emulsified polymer **UE** is a polyester, where the additional reaction step with the acid-functional component **Da** is avoided. This polyester is formed from a component **B0** which is an ester preferably of an alkanol having from one to six carbon atoms, and an at least difunctional organic acid **Ba** as defined infra having at least one acidic C-H group, the carbon atom of which is attached to carbon atoms having electronegative substituents, such as carboxyl groups, carbonyl groups, and cyano groups, with an alkanol having preferably from one to six carbon atoms, which alkanol is liberated in the transesterification process, or with an alkenol which is released after transesterification as a ketone, such as an isopropenylester.

### Oligomeric or Polymeric Michael Donor Constituents

The oligomeric or polymeric hydroxy-functional Michael donor component **B** having acidic C-H groups according to the first embodiment are preferably polyesters made from dibasic organic acids **Ba** having at least one acidic C-H group which is attached to a carbon atom having electronegative substituents, such as carboxyl groups, carbonyl groups, and cyano groups, preferably selected from the group consisting of oligomeric esters or polyesters **BM** comprising malonate groups, according to formula --O-C(O)-CH₂-C(O)-O--, which can be synthesised, e. g., by transesterification of dialkyl malonates **Bm** with organic dihydroxy compounds **Bh,** which are preferably linear or branched aliphatic or cycloaliphatic diols, in the presence of transition metal catalysts, such as compounds of titanium, zirconium, tin, hafnium, antimony, and bismuth. Preferred acids **Ba** are malonic acid, alkylmalonic acids, acetylacetone dicarboxylic acid, an other beta-ketocarboxylic acids and beta-ketodicarboxylic acids. Single diols **Bh,** or mixtures of two or more than two diols are used. Preferred are cycloaliphatic or branched aliphatic diols **Bh** having from five to fifteen carbon atoms, wherein at least one is preferably selected from the group consisting of neopentylglycol, 1,2-, 1,3- and 1,4-bishydroxymethyl-cyclohexane, 2-sec-butyl-2-methyl-propanediol-1,3, 2-butyl-2-ethyl-propanediol-1,3, 2-ethyl-propane-diol-1,3, 2-butyl-2-methyl-propanediol-1,3, 2,6-bishydroxymethyl-decahydro-naphthalene, and the isomer mixture of TCD alcohol (tricyclodecanedimethanol or octahydro-4,7-methano-1H-indene-dimethanol, systematic name: 3(4),8(9)-dihydroxymethyl-tricyclo(5.2.1.02.6)decane, mixture of isomers). Among the dialkyl malonates **Bm,** those having alkyl groups of from one to four carbon atoms are preferred, such as dimethylmalonate, diethylmalonate, di-n-propylmalonate, diisopropyl-malonate, di-n-butylmalonate, and diisobutylmalonate.

The hydroxy-functional Michael donor component **B** can also be selected from compounds **B',** which are polyols **BA** having acetoacetate groups or polyols **BC** having cyanaoacetate groups, e. g., a polyether polyol or a polyester polyol having repeating units derived from multifunctional hydroxy compounds **B'h3** having at least three hydroxyl groups per molecule, and from three to ten carbon atoms, at least one of which having been reacted to form an ester of a beta-keto acid **B'ak** of formula --C(O)-CH₂-C(O)-OH, where a ketone group >C=O is bound to the alpha-carbon atom that is bound to the carboxylic acid group, preferably acetoacetic acid, or an ester of an aliphatic acid **B'aw** of formula -- CH(EWG) - C(O) - OH, having an electron-withdrawing group other than a carbonyl group, bound to the alpha-carbon atom that is bound to the carboxylic acid group, preferably cyanoacetic acid, or can be polyamide polyols comprising groups derived from acetoacetamide, and mixtures of two or more of these. Preferred other electron-withdrawing groups are cyano groups, carbonyl groups, and nitro groups. As triols **B'h3,** the triols **B21h** as mentioned infra can preferably be used. It is also possible to use a polyesterpolyol or a polyetherpolyol having both hydroxyl end groups, and end groups which are esters of a monofunctional beta-keto acid **B'ak,** or of a monofunctional aliphatic acid **B'aw,** as mentioned supra. There must be, of course, at least one hydrogen atom bound to the alpha-carbon atom of the acid **B'a.** The diacid component **Bs** in the polyester polyol is an aliphatic or aromatic diacid having at least four, and not more than twelve carbon atoms, preferably selected from the group consisting of succinic acid, adipic acid, 1,2-, 1,3-, and 1,4-cyclohexanedicarboxylic acid, terephthalic acid, and isophthalic acid.

According to the second embodiment mentioned supra, polyesters **BM** comprising malonate groups, according to formula --O-C(O)-CH₂-C(O)-O--, which are prepared by a polycondensation directly from malonic acid or preferably, alkyl esters of malonic acid **Bm** with cycloaliphatic or branched aliphatic diols **Bh** having from five to fifteen carbon atoms, wherein at least one is preferably selected from the group consisting of neopentylglycol, 1,2-, 1,3- and 1,4-bishydroxymethylcyclohexane, 2-sec-butyl-2-methyl-propanediol-1,3, 2-butyl-2-ethyl-propanediol-1,3, 2-ethyl-propane-diol-1,3, 2-butyl-2-methyl-propanediol-1,3, 2,6-bishydroxymethyldecahydronaphthalene, and the isomer mixture of TCD alcohol (tricyclodecanedimethanol or octahydro-4,7-methano-1H-indene-dimethanol, systematic name: 3(4),8(9)-dihydroxymethyl-tricyclo(5.2.1.02.6)decane, mixture of isomers), are used as without further chain extension by compounds **Da** or **Di.** It is also possible, in another preferred embodiment, to replace at least partly the aliphatic diols by oligomeric or polymeric diols, such as polyalkyleneglycol diols having from two to six carbon atoms in the alkylene group, and also by polyester polyols or polycarbonate polyols which have preferably two hydroxyl groups per molecule.

In a preferred version of the first embodiment, the oligomeric esters or polyesters **BM** comprising malonate groups can be reacted with an isocyanate-functional component **Di,** optionally together with further hydroxy-functional components as detailed infra under "Optional Components in the Polymeric Michael Donor", to obtain a mixed polyester-polyurethane.

### Monomeric Michael Donor Components

The Michael donor can also be selected from reaction products of a monomeric dihydroxy-functional component **B2** having acidic C-H groups, selected from the group consisting of hydroxy-functional diesters **B22** of one mole of a dibasic carboxylic acid **B22a** having C-H acidic hydrogen groups with two moles of at least dihydric aliphatic alcohols **B22h,** such as bis-2-hydroxyethylmalonate, and monoesters **B21** of triols **B21h** which are esterified with C-H acidic monocarboxylic acids **B21a,** preferably triols **B21h** that have at least two hydroxymethyl groups bound to the same carbon atom, such as glycerol and trimethylolalkanes acetoacetic acid or cyanoacetic acid or their reactive derivatives, such as glycerol monoacetoacetate, trimethylolalkane monoacetoacetate or glycerol monocyanoacetate and trimethylolalkane monocyanoacetate where the trimethylolalkane may be trimethylolethane, trimethylolpropane, trimethylolbutane or trimethylolpentane, which triol **B21h** is first reacted with one mole of a ketone to form a ketal blocking two of the three hydroxyl groups, then esterified, and after esterification, the ketal is hydrolysed to yield the triol monoester **B21,** preferably, glycerol monoester or trimethylolalkane monoester. For use in the polymers **UE** or **US** of the present invention, two molecules of these compounds **B2** have to be reacted with at least one molecule a component **D** to form an oligomer or polymer.

Polyesters **U'EE** comprising malonic acid groups can be made via transesterification from dialkylmalonates or other reactive derivatives of malonic acid, optionally together with other difunctional acids or reactive derivatives therefrom, and organic compounds **B22h2** having two hydroxyl groups in a molecule, or mixtures of more than one of such compounds. Polyesters **U'EE** comprising other moieties with acidic C-H groups can be made by polycondensation reaction of aliphatic dicarboxylic acids **B22a** having from four to forty, preferably six to thirty-six carbon atoms, preferably selected from the group consisting of adipic acid, an dimer fatty acids, or aromatic dicarboxylic acids having from eight to twelve carbon atoms, such as terephthalic acid, isophthalic acid, and 1,4-, 2,3-, and 2,6-naphthalene dicarboxylic acids, with monoesters **B21** of triols **B21h** which are esterified with C-H acidic monocarboxylic acids **B21a,** preferably triols **B21h** that have at least two hydroxymethyl groups bound to the same carbon atom, such as glycerol and the trimethylolalkanes trimethylolethane, trimethylolpropane, trimethylolbutane and trimethylolpentane, with C-H acidic mono-carboxylic acids, preferably acetoacetic acid and cyanoacetic acid or their reactive derivatives, to form esters such as glycerol monoacetoacetate, trimethylolalkane monoacetoacetate or glycerol monocyanoacetate and trimethylolalkane monocyanoacetate where the trimethylolalkane maybe trimethylolethane, trimethylolpropane, trimethylolbutane or trimethylolpentane, which triol **B21h** is first reacted with one mole of a ketone to form a ketal blocking two of the three hydroxyl groups, then esterified, and after esterification, the ketal is hydrolysed to yield the triol monoester **B21,** preferably, glycerol monoester or trimethylolalkane monoester.

For use in the polymer U'S, which is in this case a self-emulsified polyester **U'SE,** the polyester must also comprise hydrophilic moieties derived from additional monomers used in the polycondensation process, which are built into the polymer chain, or moieties that are attached to the polymer chain by reaction with the end groups of the polyester, i. e. either a hydroxyl group, or an acid group.

Other useful monomeric mono-hydroxy-functional components **B1** having acidic C-H groups are monohydroxy esters of dihydric alcohols with acids having acidic C-H groups such as acetoacetic acid and cyanoacetic acid or monoalkylmalonates, e. g., 2-hydroxyethylaceto-acetate, 2-hydroxypropylacetoacetate, 2-hydroxyethylcyanoacetate and 2-hydroxyethyl-monoethyl-malonate, which hydroxyesters **B1** can become end groups of a polymer chain. A reaction product of one molecule of **D** and two molecules of **B1** can be used as oligomeric Michael donor component.

### Self-Emulsifying Polymers US

The self-emulsifying polymer **US** differs from an externally emulsified polymer **UE** in that it has, additionally, as further constituents in the polymer chain, structural elements of compounds **A** that have hydroxyl groups as functional groups, and moieties which are hydrophilic, and can be nonionic if derived from compounds **An,** or anionic if derived from compounds **Aa,** or can have both anionic and nonionic substructures if derived from compounds **Aan.** These structural elements have pending hydrophilic groups as end groups or side chains, or hydrophilic groups which form part of the polymer chain. Compounds **An1** have either only one hydroxyl group, designated as **An11,** whereby they can be located at the polymer chain end, to be a terminal hydrophilic entity, or they have two or more hydroxyl groups, designated as **An12,** which allows them to be built into the polymer chain, and form pendant hydrophilic moieties.

The hydroxy-functional hydrophilic component **A** is preferably selected from the group consisting of
- a component **Aa** which has at least one, preferably two, hydroxyl groups and an acid group, which is preferably sterically hindered, or
- a component **An1** which is a monoalkylether of a polyoxyalkylene glycol having from one to four carbon atoms in the alkyl group, and from two to four carbon atoms in the alkylene group which is linear or branched, preferably two carbon atoms in the alkylene group which is linear or branched, and where the polyoxyalkylene group is bound with the remaining hydroxyl group by an ether bond to
   - a dihydric alcohol, to yield a monohydroxy-functional component **An11,** or
   - an at least trihydric alcohol, preferably a trihydric alcohol, to yield a dihydroxy-functional, or higher functional component **An12,** or
- a polyoxyalkylene glycol **An2** having two hydroxyl groups, wherein the alkylene group is linear or branched and has from two to four carbon atoms in the alkylene group, preferably two carbon atoms in the alkylene group, or
- a mixture of at least two of **Aa, An11, An12,** and **An2,** preferably of **Aa** and **An12.**

In a further embodiment, in the case of the self-emulsifying polymer **US** being a polyurethane, it is also possible to introduce hydrophilic groups which comprise lateral polyoxyalkylene chains, by addition of polyoxyalkylene glycol monoethers **AnOl,** preferably monoalkyl polyethylene glycol, and using also trifunctional isocyanates **Di3** in the synthesis of the self-emulsifying polyurethane where the amount of the **Di3** has to be chosen to compensate for the presence of **AnOl,** viz., the amount of substance of **Di3** should be approximately equal to the amount of substance of **An01:** *n*(Di3) ≈ *n*(An01), where approximately equal means that the ratio *n*(Di3) / *n*(An01) is : 0.7 ≤ *n*(Di3) / *n*(An01) ≤ 1.3.

Preferred nonionic hydrophilic moieties are derived from oligomeric or polymeric oxyalkylene ethers, wherein the alkylene groups have from two to four carbon atoms and are linear or branched, preferably they have two or three carbon atoms, or they are derived from copolymers having both oxyethylene and oxypropylene moieties, and most preferred, from homopolymers consisting of oxyethylene groups only. In the context of the present invention, oligomers have up to ten repeating units, and polymers have at least eleven repeating units. The nonionic hydrophilic group can form a part of the polymer chain, as in the case of, e. g., a polyoxyethylene diol having one hydroxyl group at each end of its chain, or it can be a pending group where there are at least two hydroxyl groups close together at one end of polyoxyethylene chain, and no other reactive hydroxyl group at the other end of the chain.

Such nonionic hydrophilic moieties can be introduced into the polymer by reaction of nonionic hydrophilic compounds **An1** including both **An11** and **An12,** or **An2,** collectively referred to as **Anh,** having hydroxyl groups as functional groups, or by reaction of nonionic hydrophilic compounds **Anf** having functional groups that react with hydroxyl groups to form ester bonds or urethane bonds in the polymer chain of **US.**

Preferred nonionic hydrophilic compounds **An12** are dihydroxy-functional monoethers of trimethylolalkanes having from four to ten carbon atoms with monohydroxy-functional oligomeric or polymeric oxyalkylene alkyl ethers, where the alkyl group has preferably from one to four carbon atoms, and the alkylene groups have from two to four carbon atoms, preferably two to three, particularly preferred, two, or can be copolymers having oxyethylene and oxypropylene units, in random or block copolymer form. Particularly preferred are compounds **An12** which are ethers of formula

R-O-(CH₂-O-)ₙ-O-CH₂-C(R')(CH₂OH)₂,

where
- R: is an alkyl group preferably having from one to four carbon atoms, preferably selected from the group consisting of methyl, ethyl, n-propyl, iso-propyl, n-butyl, iso-butyl, sec-butyl and tert-butyl, particularly preferred, methyl,
- R': is H, or an alkyl group having from one to seven carbon atoms, preferably methyl, ethyl, n-propyl, and n-butyl, and
- n: is an integer number of at least 5, preferably from 10 to 50.

The use of these nonionic emulsifying moieties in the polyurethane allows to avoid introducing the hydroxycarboxylic or aminosulphonic acids usually used to make polyurethanes water-dispersible. It was also found that combinations of these non-ionic hydrophilic agents with the said hydroxycarboxylic or aminosulphonic acids **Aa,** particularly with bis-hydroxymethylpropionic acid, work well, and the amount of substance of such hydrophilic agents can be reduced if a mixture of non-ionic and anionic hydrophilisation is used.

It is also possible to introduce polyether polyols based on dihydroxypolyoxyalkyleneglycols which are linear or branched into the polymer chain. Particularly preferred are polyoxyethylene glycols having a molar mass from 500 g/mol to 4000 g/mol.

Preferred anionic hydrophilic moieties are those that have at least one anionic group, or at least one group that can be converted to an anionic group by salt formation (neutralisation), derived from compounds having anionic groups, or are able to form anionic groups when reacted with an alkaline substance. One further reactive group is needed in the compounds **Aa** to incorporate this moiety into the polymer, to form an end group, and two further reactive groups are needed for incorporation into the polymer chain in addition to those groups that are needed to incorporate these moieties into the polymer chain in a non-terminal position. The further reactive group is preferably a hydroxyl group, that can react with an acid-functional component **Da** to form an ester bond, or that can react with an isocyanate-functional group **Di** to form a urethane bond; or an amino group which may be primary or secondary, and that can react with an acid-functional component **Da** to form an amide bond, or that can react with an isocyanate-functional group **Di** to form a urea bond.

Preferred compounds **Aa** are therefore hydroxy acids **Aha** having one or preferably two hydroxyl groups, the acid group preferably being a carboxyl group --C(O)-OH, such as 2,2-bis-hydroxymethylacetic acid and its homologues, or a sulfonic acid group --S(O₂)-OH, and amino acids **Aaa** having one or two primary and/or secondary amino groups, such as 2-aminoethyl-2-aminoethane sulfonic acid.

These polymers **US** are made from a hydroxy-functional component **B** having, on average, at least one acidic C-H group per molecule as Michael donor, and least two hydroxyl groups per molecule, and an at least difunctional component **D** that reacts with hydroxyl groups of component **B,** and additionally, from compounds **A** that can be incorporated into the polymer chain by reaction of their hydroxyl groups, in the case that hydroxy-functional compounds **Ah** are used, with functional groups of components **D,** or by reaction of functional groups that can react with hydroxyl groups of component **B,** in the case that compounds **Af** are used that can react with hydroxyl groups, by collective or consecutive or mixed reaction, under polyaddition or polycondensation.

A hydroxy-functional component **A** having at least one hydroxyl group and at least one hydrophilic group is incorporated into the polymer made from a polymeric hydroxy-functional component **B** having Michael donor groups as defined supra and a monomeric, oligomeric, or polymeric at least difunctional component **D** as defined supra that reacts with hydroxyl groups of component **B** by collective or consecutive or mixed reaction, under polyaddition or polycondensation. The hydroxy-functional component **A** can be a dihydroxy compound derived from a polyoxyalkylene which is hydrophilic, preferably polyoxyethylene and copolymers comprising oxyethylene and oxypropylene moieties, as block copolymers, or as random copolymers. Particularly preferred is a polyoxyethylene diol which can be incorporated into the polymer **US** by reaction of the terminal hydroxyl groups with component **D** during he polymer synthesis. A very efficient method for providing the needed hydrophilicity is the use of a reaction product **Ay** of a trimethylolalkane whereof only one hydroxyl group is part of an ether bond with a polyoxyethylene chain, the other terminal hydroxyl group of the polyoxyethylene chain being etherified preferably with a C₁- to C4- alkyl group, and the remaining two hydroxyl groups of the trimethylolalkane which had been temporarily protected during the ethoxylation step serve to incorporate this compound **Ay** into the polymer chain. As trimethylolalkane, tris-hydroxymethylmethane, 2,2-bishydroxymethylpropane-1-ol, 2,2-bishydroxymethylbutane-1-ol, and 2,2-bishydroxymethyl-pentane-1-ol are preferably used. These hydrophilic modifiers **Ay** can be combined with the dihydroxy carboxylic acids **Aa** mentioned supra, wherein a synergy has been noted between these two types of hydrophilic agents.

It has been found that mixtures of anionic hydroxyfunctional compounds **Aha** and nonionic compounds **Anh** show synergistic behaviour, i. e., the sum of the masses of a mixture of **Aha** and **Anh** is lower than that of one component **Aha** or **Anh** alone to achieve the same desired hydrophilicity in the reaction. It was also found that by the reduction of the hydrophilicity of the coating film produced from such combinations, the moisture resistance at room temperature and elevated temperature was improved.

### Optional Components in the Polymeric Michael Donor

Optionally, moieties derived from further hydroxy-functional components **B"** can also present in the polymer chain of polymer **UE** or of polymer **US.** These further hydroxy-functional components **B"** can be polymeric, such as polyesterdiols **BE** made from aliphatic or aromatic dicarboxylic acids **BEa** with organic dihydroxy compounds **BEh,** preferably linear or branched aliphatic, or cycloaliphatic diols, and polycarbonatediols **BC** made from reactive derivatives of carbonic acid including dialkyl carbonates, alkylene carbonates, and carbonyl halogenides with organic dihydroxy compounds **BEh,** preferably linear or branched aliphatic, or cycloaliphatic diols having from four to ten carbon atoms.

These additional moieties are incorporated by using, in the synthesis of the polymer **UE,** or of the polymer **US,** further hydroxy-functional components **B"** which are selected from low molar mass aliphatic linear, branched or cyclic dihydroxy compounds **B"h** having a molar mass not exceeding 600 g/mol, polycarbonatediols **BC** made from reactive derivatives of carbonic acid including dialkyl carbonates, alkylene carbonates, and carbonyl halogenides with organic dihydroxy compounds **BEh,** which are preferably linear or branched aliphatic, or cycloaliphatic diols having from four to ten carbon atoms, and polyesterdiols **BE** having a molar mass higher than 600 g/mol, made by polycondensation of aromatic or aliphatic linear, branched or cyclic dicarboxylic acids **B"a,** and aliphatic linear, branched or cyclic dihydroxy compounds **BEh,** wherein the stoichiometry in the polycondensation reaction to prepare the polyesterdiols **BE** and the polycarbonate diols **BC** is chosen such that the amount of substance of hydroxyl groups is always larger than the amount of substance of carboxyl groups or carbonic acid groups, to ensure the formation of hydroxyl end groups.

The hydroxy-functional component **B"h** having at least two hydroxyl groups per molecule is selected from the group consisting of aliphatic linear, branched or cyclic diols having at least two carbon atoms, and preferably not more than forty carbon atoms, preferably, ethylene glycol, 1,2- and 1,3-dihydroxypropane, 1,2-, 1,3- and 1,4-dihydroxybutane, 1,5-dihydroxy-pentane, neopentylglycol, 1,6-dihydroxyhexane, 3-methylpentane-1,5-diol, 1,2- and 1,8-dihydroxyoctane, 2,2,4-trimethylpentane-1,3-diol, 1,2- and 1,12-dodecanediol, 1,2- and 1,-16-hexadecanediol, 1,2- and 1,18-octadecanediol, and dimer diols made from dimerised fatty acids by hydrogenation.

### General Considerations for the Polymeric Michael Donor

The polymer **U** is preferably a polyester **UE** which can be either externally emulsified (**UEE**), or self-emulsified (**UES**), having ester groups --C-O-C(O)-C-- in the polymer chain, which ester groups are formed in a polycondensation reaction from polymeric hydroxy-functional compounds **B** having at least two hydroxyl groups per molecule, and from acid-functional compounds Da having at least two acid groups per molecule, or at least one acid anhydride group per molecule, which acid groups are preferably carboxylic acid groups --C(O)-OH, or in a polycondensation reaction from compounds **Bb** having at least one hydroxyl group per molecule and at least one carboxylic acid group per molecule.

Another, more preferred, polymer **U** is a polyurethane **UU** which can be either externally emulsified (**UUE**), or self-emulsified (**UUS**), having urethane groups --C-N(H)-C(O)-O-C-- in the polymer chain, which urethane groups are formed in a polyaddition reaction from hydroxy-functional polymeric compounds **B** having at least two hydroxyl groups per molecule, and from isocyanate-functional compounds **Di** having at least two isocyanate groups per molecule. Useful Michael donor groups are derived from malonic acid, from acetoacetic acid, from cyanoacetic acid, and from acetamido compounds. At least difunctional constituents are needed for polymerisation, more than two reactive groups per molecule of the binder composition are needed for crosslinking of the coating film. A balance must be found between the needed degree of crosslinking for hardness and chemical and solvent resistance, and avoiding brittleness of the film due to a too high degree of crosslinking.

As mentioned supra, the use of **Da** and **Di** in a two-step reaction is also a preferred embodiment, preferably first building a hydroxy-functional polyester using **Da** to attach hydroxy-functional molecules **B,** alone or together with one or more of the optional components, to each other which polyester is then reacted, alone or together with one or more of the optional components, with **Di** under formation of a polyester-urethane.

With preference, **Da** is a reactive derivative of a dibasic acid that is able to react with the oligomeric or polymeric hydroxy-functional component **B,** and optionally, also with compounds **A** that are hydroxy-functional and are hydrophilic, as used in the synthesis of the self-emulsifying polymers **US.** As the use of acid anhydrides would generate acid groups, ir is preferred in this case to use other reactive derivatives of acids, particularly isopropenyl esters or esters of other enols, which are split off as isopropenol molecules which immediately convert to their tautomeric form, acetone, which can be removed by distillation. In this way, no acid groups are generated which would interfere with the basic catalysis of the Michael reaction.

The compounds **Di** are diisocyanates which are well known for formation of polyurethanes. Commonly used diisocyanates are the aliphatic isocyanates having from four to twenty carbon atoms, preferably, 1,4-diisocyanatobutane, 1,6-diisocyanatohexane, cycloaliphatic diisocyanates such as isophorone diisocyanate, 1,4-cyclohexane diisocyanate, bis-(4-isocyanato-hexyl)methane, and aromatic diisocyanates such as tetramethylxylylenediisocyanate, toluene diisocyanate and bis-(4-isocyanatophenyl)methane. It is also possible to use trifunctional or higher functional isocyanates **Di3 ,** alone, or in combination with difunctional diisocyanates **Di2,** if only low molar mass compounds are synthesised this way, in an amount that does not lead to danger of gel formation and premature crosslinking, the amount having to be found by experiments for each individual case.

With preference, the polymeric hydroxy-functional component **B** used for the synthesis of polymers **UE** or **US** is selected from the group consisting of
- a polyesterpolyol **B1** comprising malonate moieties, calculated as -CO-CH₂-CO- with a molar mass of 70.05 g/mol, in a mass fraction of at least 15 %,
- a polyether polyol **B21** or a polyester polyol **B22** having repeating units derived from multifunctional hydroxy compounds **B3** having at least three hydroxyl groups per molecule, at least one of which having been reacted to form an ester of a beta-keto acid, preferably acetoacetic acid, or an ester of an aliphatic acid having an electron-withdrawing group in beta-position to the carboxylic acid group, preferably cyanoacetic acid, and
- a polyamide polyol **B4** comprising groups derived from acetoacetamide, and
- mixtures of two or more of **B1, B21, B22,** and **B4.**

### The Michael Acceptor

In a water-borne coating composition, the said aqueous polymer dispersion of polymer **U** comprising Michael donor groups is combined with a second component hereinafter referred to as "Michael acceptor" **MA** which is at least one organic compound having at least two activated olefinically unsaturated groups of formula 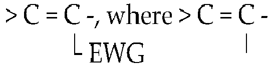 is one of the olefinically unsaturated groups, and "EWG" stands for "Electron-Withdrawing Group". The Michael acceptor can be a monomeric, oligomeric or polymeric compound, and it is also possible, within the scope of the present invention, that the same polymer may carry both Michael donor groups and Michael acceptor groups.

Suitable components **MA** are therefore ethylenically unsaturated components in which the carbon-carbon double bond is activated by an EWG, which is preferably a carbonyl group, a carboxylic acid group, a cyano group, or a nitro group. Representative examples of such components are disclosed in US 2,759,913 A, column 6, line 35, to column 7, line 45, DE 835 809 B, column 3, lines 16 to 41, US 4,871,822 A, column 2, line 14, to column 4, line 14, US 4,602,061 A, column 3, line 14, to column 4, line 14, US 4,408,018 A, column 2, lines 19 to 68, and US 4,217,396 A, column 1, line 60, to column 2, line 64. Among these, acrylates and maleates are preferred. Most preferably, the component **MA** is an unsaturated acryloyl functional component. A first preferred group of suitable components **MA** are acrylic esters of hydroxyfunctional compounds having from 2 to 6 hydroxyl groups and from one to twenty carbon atoms. These esters may optionally contain hydroxyl groups. Especially preferred examples include hexanediol diacrylate, trimethylol propane triacrylate, pentaerythritol triacrylate, and di-trimethylolpropane tetraacrylate.

A further preferred group of compounds are polyesters based on maleic, fumaric and/or itaconic acid, and anhydrides thereof if they exist, and on divalent or polyvalent hydroxyl compounds, optionally also including minor amounts of monovalent hydroxyl and/or carboxyl compounds. Still further preferred group are polyesters, polyurethanes, polyethers and/or alkyd resins containing pendant activated unsaturated groups. These include, for example, urethane acrylates obtained by reaction of a polyisocyanate with an hydroxyl group-containing acrylic ester, e.g., an hydroxyalkyl ester of acrylic acid or a component prepared by esterification of a polyhydroxyl component with less than a stoichiometric amount of acrylic acid; polyether acrylates obtained by esterification of an hydroxyl group-containing polyether with acrylic acid; polyfunctional acrylates obtained by reaction of an hydroxyalkyl acrylate with a polycarboxylic acid and/or a polyamino resin; polyacrylates obtained by reaction of acrylic acid with an epoxy resin; and polyalkylmaleates obtained by reaction of a monoalkylmaleate ester with an epoxy resin and/or an hydroxy functional oligomer or polymer.

Most preferred activated unsaturated group-containing components **MA** are unsaturated acryloyl functional compounds. It is also especially preferred that the acid value of the activated unsaturated group-containing components is sufficiently low to not substantially impair the activity of the catalyst, preferably less than about 2 mg/g, and most preferably less than 1 mg/g. These and other activated unsaturated group-containing compounds and their methods of production are generally known to those skilled in the art.

Preferably, the functionality, i. e. the number of activated olefinically unsaturated groups in one molecule, is from two to twenty. The number average molar mass *M*ₙ of the compounds **MA** is preferably between 200 g/mol and 5000 g/mol. The specific amount of substance of olefinically unsaturated groups in the compounds **MA** is preferably from 0.5 mol/kg to 10 mol/kg, corresponding to an "equivalent weight" which is the ratio of the number average molar mass and the number of reactive functional groups per molecule, of from 100 g/mol to 2000 g/mol.

Useful Michael acceptors are at least difunctional olefinically unsaturated compounds with carbon-carbon double bonds that are activated by electron-withdrawing groups. Esters of olefinically unsaturated carboxylic acids with multifunctional alcohols which are optionally alkoxylated, or oligomeric compounds comprising esters of olefinically unsaturated carboxylic acids are preferred, particularly esters of acrylic acid. The Michael acceptor which has preferably acryloyl functions as functional moieties can be introduced into the polyurethane by adding esters of multivalent alcohols that are not fully esterified with olefinically unsaturated carboxylic acids, particularly acrylic acid, to an isocyanate functional polyurethane prepolymer. Examples of such partial esters are hydroxyethyl acrylate, penterythritol triacrylate, and dipentaerythritolpentaacrylate, or acrylic esters from alkoxylated multivalent alcohols, which lead to concentration of the Michael acceptor groups at the chain end(s) if monohydroxy compounds are used.

Another embodiment comprises addition of resinous compounds having Michael acceptor groups, also preferably acryloyl groups. These include polyurethanes that comprise acryloyl groups, which generally are compatible with the polyurethanes according to this invention which have acidic C-H groups. It is also possible to add oligomeric compounds having acryloyl functional groups, particularly those that are based on reaction products of partially acrylated multivalent alcohols, which may also be alkoxylated before esterification with acrylic acid.

In a preferred embodiment, Michael acceptor structures can also be built into the polymer **U,** either an externally emulsified polymer **UE,** or a self-emulsifying polymer **US,** which comprises Michael donor groups. This can be effected by addition of a component **E** which is a single compound, or a mixture of compounds which are monomeric, dimeric or oligomeric hydroxy-functional compounds which can also be alkoxylated (ethoxylated or propoxylated, or with mixed oxyalkylation), and which are not fully esterified with olefinically unsaturated carboxylic acids, preferably, acrylic acid, i. e., they have still hydroxyl groups which are not esterified. These compounds are also commercially available, also as mixtures with fully esterified compounds, and include compounds such as ditrimethylolpropane triacrylate or pentaerythritol triacrylate. These compounds usually have only one hydroxyl group per molecule, and are therefore chain stoppers during the polyaddition or polycondensation reaction to form polymer **U.**

In another preferred embodiment, Michael acceptor groups are chemically bound to a carrier compound different from the polymer **U,** preferably to an oligomeric or polymeric ether or urethane compound such as a polyhydroxypolyether or a polyhydroxy urethane, which is co-emulsified in the dispersion of polymer **U,** where the carrier compound does not have free reactive hydroxyl groups. In a still further preferred embodiment, both co-emulsified carrier molecules having Michael acceptor groups, and polymers **U** having Michael acceptor groups chemically bound to their backbone can be combined in a binder dispersion. These systems can be prepared by adding, during the synthesis of polymer **U,** a mixture of a fully esterified polyhydroxy compound, and a partially esterified polyhydroxy compound, where esterification is effected by an olefinically unsaturated carboxylic acid, preferably acrylic acid. Such mixtures are also available commercially, e. g., mixtures of pentaerythritol triacrylate and pentaerythritol tetraacrylate.

### The Catalyst

The water-borne coating composition further comprises a catalyst **C** to facilitate the Michael addition reaction. Useful catalysts are those described in EP 2 374 836 A1, where a substituted carbonate salt **C1**

X⁺O⁻CO-O-R

is used as latent base catalyst, X⁺ being a cation, where R is H (forming a hydrogen carbonate), or linear or branched alkyl from one to twenty carbon atoms, or aralkyl from seven to twenty-five carbon atoms, (both forming ester-carbonates), M⁺ is an alkali cation, an earth alkali cation, an organic ammonium cation R'₄N⁺, or an organic phosphonium cation R"₄P⁺, where the groups R' and R" are linear or branched or cyclic alkyl groups having from one to ten carbon atoms, such as methyl, ethyl, isopropyl, n-butyl, 2-ethylhexyl, cyclohexyl, and stearyl, or aralkyl from seven to twenty-five carbon atoms, such as benzyl and phenethyl, and may be different from each other in one cation, such as methyltriethyl ammonium, trihexyl tetradecyl phosphonium, triisobutyl methyl phosphonium, and octadecyl trioctyl phosphonium.

Other basic catalysts that accelerate the reaction between Michael donor compounds and Michael acceptor compounds are compounds **C2** which are salts of alkali metal cations or organic ammonium cations or organic phosphonium cations, and anions which are preferably carbanions derived from cyanoacetates such as ethylcyanoacetate (pKₐ = 9.0), 1,3-diketones such as acetylacetone (pKₐ = 8.95), 1,3-cyclohexanedione (pKₐ = 5.3), and 5,5-dimethyl-1,3-cyclohexanedione (pKₐ = 5.23), and nitroalkanes such as nitromethane (pKₐ = 10.2), nitroethane (pKₐ = 8.5), and 2-nitropropane (pKₐ = 9.98). These can preferably be combined with one or more optional components **C2'** which have one or more acidic Q-H groups wherein Q is selected from the group consisting of nitrogen, phosphorus, oxygen, sulfur, and carbon, the Q⁻ anion being a Michael addition donor reactable with a Michael acceptor, wherein the pKa(C2') of the Q-H group in component **C2**' is more than two lower than the pKₐ(MD) of the first proton of the Michael donor component and being lower than 10.5, and the ratio *n*(H, C2') / *n*(C⁻, C2) of the amount of substance of acidic Q-H groups in component **C2'** to the amount of substance of the carbanion in component **C2** is between 0.01 and 50. **C2'** is preferably an organic amine compound having at least one >NH group where the pKₐ value (negative decadic logarithm of the ionisation constant Kₐ) for the reaction >N-H ⇄ >N⁻ + H⁺ is between 4 and 14. These systems are disclosed in WO 2014/166880 A1. Among the preferred organic nitrogen compounds are succinimide, 1,2,4-triazole, and 1,2,3-benzotriazole.

A further catalyst system **C3** for crosslinking by Michael addition using Michael donor and Michael acceptor under formation of C-C bonds has been disclosed in WO 2018/005 077 A1 which is a dormant carbamate initiator of formula 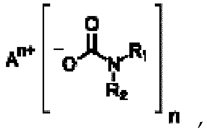 wherein n is an integer equal to, or greater than, one, and Aⁿ⁺ is a cationic species or a polymer, with the proviso that Aⁿ⁺ is not H⁺, and optionally, further comprises ammonium carbamate, H₂R'¹R'²N⁺⁻O-(CO)NR"¹R"², wherein each R¹, R², R'¹, R'², R"¹ and R"² is independently selected from the group consisting of a hydrogen atom, and a linear or branched, substituted or unsubstituted, alkyl group having from one to twenty-two carbon atoms. Mixtures of carbamate catalysts **C3** and carbonate catalysts **C1** which are also preferably used have been described in WO 2018/231927 A1 and also in WO 2018/231920 A1.

### Preparation of a Paint Binder

The aqueous dispersion of polymer **U** comprising Michael donor groups is mixed with the appropriate amount of a Michael acceptor component, taking into account if a Michael acceptor compounds has already been incorporated into the polymer **U,** or has been added thereto before or during dispersion, pigments, dyes, fillers, and additives such as antisettling agents, dispersants, defoamers, wetting agents, light and UV stabilisers, flow modifiers, adhesion promoting agents, coalescence agents, corrosion inhibitors, matting agents, and flame retardants are added, and finally, the catalyst is added. The quantities of Michael donor and Michael acceptor are chosen in a way that the ratio *n*(C-H) / *n*(>C=C<) of the amount of substance *n*(C-H) of activated acidic protons C-H in the Michael donor component to the amount of substance *n*(>C=C<) of activated unsaturated groups >C=C< in the Michael acceptor component is between 10 mol/mol and 0.1 mol/mol, more preferably between 5 mol/mol and 0.2 mol/mol, even more preferably between 2 mol/mol and 0.5 mol/mol, and most preferably between 1.5 mol/mol and 0.8 mol/mol. In the Michael addition, in which the activated C-H group of the Michael donor, when deprotonated, adds to one of the carbon atoms of the activated olefinically unsaturated group of the Michael acceptor. The activated methylene (>CH₂) group can, in principle, be equivalent with two activated methine (≡CH) groups. This is, however, only the case for those Michael donor / Michael acceptor combinations wherein both hydrogen atoms of the Michael donor component are reactive; for example in case of a system comprising malonate and acryloyl reactive groups, both hydrogen atoms of the methylene group in the malonate entity can react. In a Michael addition reaction with maleates, this is not the case: the second hydrogen atom of the methylene group is no longer reactive once one maleate molecule has been added.

It is also possible to use the coating compositions of the present invention in dual cure-applications, i. e. curing by both Michael addition and actinic radiation, as the Michael acceptor components can also cure upon exposure to actinic irradiation, where in the case of UV light, a photoinitiator is needed to form free radicals that initiate the polymerisation process during the photocuring reaction, while no additional photoinitiator is needed when using electron beams as actinic radiation. The combination of these two curing reactions leads to faster formation of the cured coating film, and to higher hardness and better solvent resistance of the cured coating film. This dual cure technology also allows to reduce the amount of photoinitiator used in curing with UV light alone, and thus helps to reduce problems with yellowing of the coating films due to higher amounts of photoinitiator present in the coating film.

The aqueous coating compositions according to the invention can be used particularly as topcoat in marine, protective and industrial OEM market applications. For these applications, usual further components such as fillers, light stabilisers, flow and levelling additives, pigments, pigment wetting agents, antisettling agents, coalescence agents, and biocides can be added to the coating compositions. The coating compositions in accordance with the present invention are suitable for a variety of coatings uses, for example, as paint, impregnating, sealing and bonding compositions. A preferred application is as a primer, topcoat, or clearcoat; the coating compositions may be applied to a substrate in any convenient manner such as, for example, by brushing, spraying or dipping. Suitable substrates include metals, wood, board, plastics, paper, cardboard, leather, concrete, stone, and other mineral substrates. Curing of the above-described coating compositions is preferably carried out at temperatures above about 0 °C, generally between about 5 °C and about 150 °C, preferably at from 5 °C to 60 °C, and most preferably between 5 °C and 30 °C (also comprising room temperature).

### Further Uses

In addition to the use in coating compositions, combinations of catalysts **C** with dispersions of the polymer **U** comprising Michael donor groups, and further compounds comprising Michael acceptor groups, or combinations of catalysts **C** with dispersions of polymers **U** which further comprise Michael acceptor groups in this polymer can also be used as binder system in polymer concrete, together with the usual further concrete constituents which are commonly referred to as "construction aggregate" or simply "aggregate", and comprise coarse to medium sized particulate material including sand, gravel, crushed stone and crushed slag, and also recycled comminuted concrete, and extenders and fillers, such as fly ash, and rock flour.

Other preferred applications are as impregnating, sealing, and bonding compositions, for nail varnishes or the production of gel nails.

### Advantages of the Present Invention

The main advantages that have been realised with the binder according to the invention are, i. a.,
- no use of free isocyanates during application of the polymer
- avoidance of organic solvents during formulation
- very long potlife which reduces waste due to premature gelling of the coating composition
- very fast cure at ambient temperature
- very good hardness development in combination with a high ductility and flexibility of the coating film
- very high chemical resistance due to a high crosslinking density
- very high gloss, and good appearance
- good UV resistance
- no formation of blisters during curing (which is observed due to a side reaction of isocyanates with water in isocyanate-cured systems)
- particularly malonate-based polymers show a lower propensity for discolouration in contact with metal ions as compared to acetoacetoxy based polymers, such as used in US 5,567,761 A
- possibility of dual curing by Michael addition and radiation curing with actinic radiation, i. e. electron beam or UV light

### Examples

The invention is further explained by the following examples.

In these examples, and also in the text of the disclosure, the following physico-chemical values are used:
- the specific amount of substance *n*ₘ(F) of a certain functional group F in a chemical compound B is calculated as the amount of substance *n*(F) of the said functional group, divided by the mass *m*(B) of the compound B under consideration (the mass of the solid or undiluted compound B in the case that a solution or dispersion of the said compound B is used). The appropriate SI unit is "mol/kg"; formerly, the reciprocal value of this quantity was also used, with the deprecated designation as "equivalent weight" with the unit "g/mol",
- the mass fraction *x*_{S} of solids in a solution or dispersion is the ratio of the mass *m*_{S} of (solid) solutes or dispersed material S, divided by the mass *m*_{L} of the liquid solution or dispersion: *x*_{S} = *m*_{S} / *m*_{L}, with the SI unit of kg/kg = 1, often stated with the unit "percent" as *x*_{S} / % = 100 × *m*_{S} / *m*_{L},
- the "acid value", also referred to as "acid number", is the ratio *w*_{A} of the mass *m*_{KOH} of potassium hydroxide which is needed to neutralise a mass *m*_{B} of an acid-functional organic substance B which has an amount of substance *n*_{HA} of acidic hydrogen atoms, and the mass *m*_{B}: *w*_{A}=*m*_{KOH} /*m*_{B} = (*n*_{HA} ×*M*_{KOH})/*m*_{B} = (*n*_{HA} /*m*_{B})×*M*_{KOH} = *n*ₘ(HA) ×*M*_{KOH}, usually stated with the unit "mg/g", where *M*_{KOH} = 56.105 g/mol, *n*ₘ(X) = *n*(X) / *m* standing for specific amount of substance which is the ratio of the amount of substance *n*(X) of a compound or entity X, and the mass *m* of the composition comprising this compound or entity X,
- the "OH-value" or "hydroxyl value", also referred to as "hydroxyl number", is the ratio *w*_{OH} of the mass *m*_{KOH} of potassium hydroxide which has the same amount of substance *n*_{OH} of hydroxyl groups as a mass *m*_{B} of a hydroxy-functional organic substance B, and the said mass *m*_{B}: *w*_{OH} = *m*_{KOH} / *m*_{B} = *n*_{OH} × *M*_{KOH} / *m*_{B} = *n*ₘ (OH) × *M*_{KOH}, usually stated with the unit "mg/g", where *M*_{KOH} = 56.105 g/mol
- the "amine value", also referred to as "amine number", is the ratio *w*_{Am} of the mass *m*_{KOH} of potassium hydroxide that needs the same amount of substance of an acid for neutralisation as a mass *m*_{B} of an amine-functional organic substance B which has an amount of substance *n*_{Am} of basic amino groups Am, and the said mass *m*_{B}: *w*_{Am} =*m*_{KOH} /*m*_{B} = (*n*_{Am} ×*M*_{KOH})/*m*_{B} = (*n*_{Am} /*m*_{B})×*M*_{KOH} = *n*ₘ(Am) ×*M*_{KOH}, usually stated with the unit "mg/g", where *M*_{KOH} = 56.105 g/mol,
- the mass fraction *w*_{NCO} of isocyanate groups in a reaction mixture was calculated as the mass *m*_{NCO} of isocyanate groups, -N=C=O, having a molar mass of *M*_{NCO} = 42.017 g/mol, divided by the mass *m*_{RM} of the reaction mixture RM,
- the dynamic viscosity η was determined in a cone-plate viscometer at 25 °C and a shear rate of 100 s⁻¹ if not stated otherwise,
- the particle size of a polymer dispersion is measured by dynamic light scattering, in a "Zetasizer" (Malvern Instruments Ltd.) and the particle size (z-average particle size) obtained is the diameter of a sphere that has the same translational diffusion coefficient as the particle being measured, the so-called "hydrodynamic diameter" and refers to the way a particle diffuses within a fluid, and the dispersity Ð is defined as the ratio of the quadratic average and the square of the arithmetic average, i. e. for a number of particles where particle i has a diameter *d*ᵢ, the dispersity is Ð = ∑(*d*ᵢ²)/ (∑*d*ᵢ)², where the sums are over all particles i.
- the number average molar mass *M*ₙ and the mass average molar mass *M*ₘ of a polymer is used as defined in the IUPAC recommendations 2008, these have been measured by gel permeation chromatography (GPC) on solutions of the polymer under consideration in tetrahydrofuran having a mass concentration of solute γ (Polymer) = 1.5 g/L, wherein the elution rate was 1 mL/min, using columns for the appropriate molar mass range in each case, and calibration has been made as usual with polystyrene standards,
- the theoretical specific amount of substance *n*(CH) / *m*(Mdc) of CH-acidic hydrogen atoms in a Michael donor compound (Mdc) was calculated from the stoichiometry of the preparation reaction, where *n*(CH) is the amount of substance of acidic hydrogen atoms in activated methylene or methine groups in the Michael donor compound, and *m*(Mdc) is the mass of this Michael donor compound,
- the specific amount of substance of malonate groups --O-C(O)-CH₂-C(O)-O-- in the Michael donor compounds, *n*(mal) / *m*(Mdc), the reciprocal of this value being the "malonate equivalent weight", was measured using the following procedure:
   - a sample was dissolved in (60 ± 1) mL of dimethylformamide (DMF, dry, pro analysi grade) in an Erlenmeyer flask of 100 mL capacity, three drops of a solution of azo violet solution (4-(4-nitrophenylazo)-resorcinol, dissolved in o-xylene, mass fraction of solute 0.5 %) was added, and the flask was immediately stoppered with a flexible sleeve stopper with an N₂ inlet tube and flushed with nitrogen during the whole measurement process to avoid CO₂ consumption, titration was done manually with a sodium methoxide solution (NaOCH₃ dissolved in methanol, pro analysi grade, mass fraction of solute 25 %) from a syringe until a clear blue colour appears at the equivalence point. The amount of titrant solution was determined gravimetrically by weighing the complete syringe before and after addition. The titre of the sodium methoxide solution was determined indirectly by adding a specified amount to water, and by titration of the sodium hydroxide formed with an HCl solution with potentiometric indication. Diethylmalonate (DEM) has been applied as a reference.
and the following abbreviations have been used:
- DBTL: dibutyltin dilaurate
- di-TMPA4: di-trimethylolpropane tetraacrylate
- di-TMPA3: di-trimethylolpropane triacrylate, having a hydroxyl value of 136 mg/g, and a specific amount of substance of olefinically unsaturated groups of 7.30 mol/kg (corresponding to a "double bond equivalent weight" of 137 g/mol)
- DPHA: mixture of dipentaerythritol pentaacrylate and dipentaerythritol hexaacrylate
- EOPO-PEA4: ethoxylated/propoxylated pentaerythritol tetraacrylate, wherein the ratio of oxyethylene units to oxypropylene units to pentaerythritol units is 4 mol : 1 mol: 1 mol, having a specific amount of substance of olefinically unsaturated groups of 6.82 mol/kg, corresponding to a "double bond equivalent weight" of 146.7 g/mol
- EO-TMPTA: tri-ethoxylated trimethylolpropane triacrylate having a specific amount of substance of olefinically unsaturated groups of 7.00 mol/kg, corresponding to a "double bond equivalent weight" of 142.8 g/mol
- IPDI: isophoronediisocyanate, 5-iso-cyanato-1-[isocyanatomethyl]-1,3,3-trimethyl-cyclohexane
- MBTO: monobutyltin oxide, n-C₄H₉-Sn(O)OH
- PC-diol: polycarbonate diol, Desmophen® C 2100, Covestro, *w*_{OH} = 108.9 mg/g corresponding to a specific amount of substance of hydroxyl groups of *n*ₘ(OH) = 1.94 mol/kg
- PETIA: mixture of pentaerythritol triacrylate and pentaerythritol tetraacrylate, having a specific amount of substance of olefinically unsaturated groups of 10.1 mol/kg, and a hydroxyl number of 120 mg/g
- TCD alcohol: tricyclodecane dimethanol, 3(4),8(9)-dihydroxymethyl-tricyclo-(5.2.1.0^{2,6})-decane, mixture of isomers
- TMXDI: meta-tetramethylxylylenediisocyanate, 1,3-bis-[1-isocyanato-1-methylethyl]-benzene
- Ymer® N120: poly[oxy-1,2-ethanediyl], alpha-[2,2-bis[hydroxymethyl]butyl]-omega-methoxy-, hydroxyl value *w*_{OH} = (110 ± 10) mg/g, Perstorp AB

### Example 1a: Malonate Polyester Polyol

641 g of diethylmalonate, 980 g of TCD alcohol, and 0.35 g of MBTO were mixed and heated to 175 °C within two hours while ethanol was distilled off entirely. The reaction mixture was maintained at that temperature until a resin was obtained with a mass fraction of solids of 99.5 % and an OH-value of 107 mg/g. The number average molar mass *M*ₙ calculated therefrom is 1049 g/mol; using GPC at 25 °C and an elution rate of 1 ml/min, with a solution of the polyester polyol with a mass concentration of 1.5 g/L in tetrahydrofurane, and calibration with polystyrene standards gave a result for *M*ₙ of 1145 g/mol.

### Example 1b: Malonate Polyester Polyol

961 g of diethylmalonate, 729 g of neopentylglycol and 0.35 g of MBTO were mixed and heated to 175 °C within two hours while ethanol was distilled off entirely. The reaction mixture was maintained at that temperature until a resin was obtained with a mass fraction of solids of 95.0 % and an OH-value of 125 mg/g. The number average molar mass *M*ₙ calculated therefrom is 898 g/mol.

### Example 2: Polyurethane Dispersion with Malonate Functionality

150 g of the polyester polyol from Example 1a were mixed with 42 g of Ymer® N120 and heated to 60 °C. Then, 57 g TMXDI, and 24 g of IPDI were added to this mixture and the temperature was kept below 65 °C for one hour. 30 g of dipropyleneglycol-dimethylether were then added. The temperature of the reaction mixture was further increased to 80 °C and maintained until a mass fraction of isocyanate groups in the reaction mixture of 5.5 % was reached. In a second vessel, 300 g of deionised water and 34.1 g of diethanolamine were heated to 30 °C and the urethane prepolymer was added while stirring at 200 min⁻¹. A polyurethane dispersion was obtained which was cooled down to room temperature (23 °C). The resin dispersion had a mass fraction of solids of 48.8 %, a dynamic viscosity of 1540 mPa·s and an average particle size of 164 nm with a dispersity of 0.31. In theory the resin had a specific amount of substance of CH-acidic hydrogen atoms of 3.115 mol/kg, based on the mass of solids ("equivalent weight of acidic hydrogen" of 321g/mol).

### Example 3: Polyurethane Dispersion with Malonate Functionality

76 g of the polyester polyol from Example 1b were mixed with 42 g of Ymer® N120 and heated to 60 °C. Then, 57 g of TMXDI and 24 g of IPDI were added to this mixture and the temperature was kept below 65 °C for one hour. The temperature was then further increased to 135 °C and maintained until a urethane prepolymer with a mass fraction of isocyanate groups in the reaction mixture of 7.4 % was obtained. In a second vessel, 200 g of deionised water and 33.2 g of diethanolamine were heated to 70 °C and the urethane prepolymer was added while stirring at 200 min⁻¹. Temperature was kept below 85 °C, and a mixture of 0.75 g of 2-methylpentane-1,5-diamine and 20 g of deionised water were added. The polyurethane dispersion obtained was cooled down to room temperature (23 °C). The resin dispersion had a mass fraction of solids of 38.4 %, a dynamic viscosity of 4445 mPa·s and an average particle size of 71 nm with a dispersity of 0.17. In theory, the resin had a specific amount of substance of CH-acidic hydrogen atoms of 3.33 mol/kg, based on the mass of solids (corresponding to an "equivalent weight of acidic hydrogen" of 300 g/mol).

### Example 4: Polyurethane Dispersion with Malonate and Acryloyl Functionality

A mixture of 1500 g of Ymer® N120, 3388 g of the malonate polyester polyol of Example 1a, 935 g of PETIA, 1760 g of EO-TMPTA, 1.8 g of DBTL, and 7 g of hydroquinone monomethylether was heated to 60 °C while purging with air. Over the course of two hours, 1293 g of IPDI were added, and the temperature was maintained at 70 °C until a mass fraction of isocyanate groups in the reaction mixture of 0.5 % was reached. 468 g of methoxypropanol were then added, and the temperature was maintained until no more isocyanate could be determined. This prepolymer was dispersed in 8400 g of deionised water at a temperature of 50 °C. Viscosity was adjusted by addition of further deionised water, and the resin was cooled down to room temperature (23 °C). The resin dispersion obtained had a mass fraction of solids of 50.2 %, a dynamic viscosity of 2445 mPa·s and an average particle size of 64 nm with a dispersity of 0.06.

### Example 5: Polyurethane Dispersion with Malonate and Acryloyl Functionality

A mixture of 1450 g of Ymer® N120, 2050 g of the malonate polyester polyol of Example 1b, 1100 g of PC-diol, 2244 g of DPHA, 1.8 g of DBTL, and 7 g of hydroquinone monomethylether was heated to 60 °C while purging with air. Over the course of two hours, 1293 g of IPDI were added and the temperature was maintained at 70 °C until a mass fraction of isocyanate groups in the reaction mixture of 0.5 % was reached. 906 g of dipropyleneglycol diethylether and 533 g of methoxypropanol were added, and the temperature was maintained until no more isocyanate could be determined. This prepolymer was dispersed in 6700 g of deionised water at a temperature of 50 °C. Viscosity was adjusted by adding further deionised water and the resin dispersion was cooled down to room temperature (23 °C). The resin dispersion had a mass fraction of solids of 41.2 %, a dynamic viscosity of 2590 mPa·s and an average particle size of 130 nm with a dispersity of 0.13.

### Example 6: Polyurethane Dispersion with Malonate and Acryloyl Functionality

A mixture of 1500 g of Ymer® N120, 2050 g of the malonate polyester polyol of Example 1b, 1050 g of PC-diol, 935 g of PETIA, 1420 g of di-TMPA4, 1.8 g of DBTL, and 7 g of hydroquinone monomethylether was heated to 60 °C while purging with air. Over the course of two hours, 1293 g of IPDI were added, and the temperature was maintained at 70 °C until a mass fraction of isocyanate groups in the reaction mixture of 0.5 % was reached. 435 g of methoxypropanol were added, and the temperature was maintained until no more isocyanate could be determined. This prepolymer was dispersed in 7800 g of deionised water at a temperature of 50 °C. Viscosity was adjusted by addition of further deionised water, and the resulting resin dispersion was cooled down to room temperature (23 °C). The final resin had a mass fraction of solids of 51.0 %, a dynamic viscosity of 2180 mPa·s, and an average particle size of 93 nm with a dispersity of 0.14.

### Example 7: Polyurethane Dispersion with Malonate and Acryloyl Functionality

A mixture of 1245 g of Ymer® N120, 3388 g of the malonate polyester polyol of Example 1a, 255 g of PC-diol, 935 g of PETIA, 1760 g of EO-TMPTA, 1.8 g of DBTL, and 7 g of hydroquinone monomethylether was heated to 60 °C while purging with air. Over the course of two hours, 1293 g of IPDI were added, and the temperature was maintained at 70 °C until a mass fraction of isocyanate groups in the reaction mixture of 0.5 % was reached. 468 g of methoxypropanol were added, and the temperature was maintained until no more isocyanate could be determined. This prepolymer was dispersed in 8400 g of deionised water at a temperature of 50 °C. Viscosity was adjusted by addition of further deionised water, and the resin dispersion was cooled down to room temperature (23 °C). The resin dispersion had a mass fraction of solids of 49.9 %, a dynamic viscosity of 1699 mPa·s, and an average particle size of 84 nm with a dispersity of 0.11.

### Example 8: Polyurethane Dispersion with Malonate and Acryloyl Functionality

A mixture of 1500 g of Ymer® N120, 2050 g of the malonate polyester polyol of Example 1b, 1050 g of PC-diol, 935 g of PETIA, 1371 g of Ebecryl® 1290 (hexafunctional urethane acrylate, Allnex Belgium S.A./N.V.), 1.8 g of DBTL, and 7 g of hydroquinone monomethylether was heated to 60 °C while purging with air. Over the course of two hours, 1293 g of IPDI were added, and the temperature was maintained at 70 °C until a mass fraction of isocyanate groups in the reaction mixture of 0.5 % was reached. 435 g of methoxypropanol were added, and the temperature was maintained until no more isocyanate could be determined. This prepolymer was dispersed in 7800 g of deionised water at a temperature of 50 °C. Viscosity was adjusted by addition of further deionised water, and the resin dispersion was cooled down to room temperature (23 °C). The resin dispersion obtained had a mass fraction of solids of 47.6 %, a dynamic viscosity of 1040 mPa·s, and an average particle size of 80 nm with a dispersity of 0.11.

### Example 9: Polyurethane Dispersion with Malonate and Acryloyl Functionality

A mixture of 1245 g of Ymer® N120, 3388 g of the malonate polyester polyol of Example 1a, 255 g of PC-diol, 935 g of PETIA, 977 g of EO-TMPTA, 1.8 g of DBTL, and 7 g of hydroquinone monomethylether was heated to 60 °C while purging with air. Over the course of two hours, 1293 g of IPDI were added, and the temperature was maintained at 70 °C until a mass fraction of isocyanate groups in the reaction mixture of 0.5 % was reached. 468 g of methoxypropanol were added and temperature maintained until no more isocyanate could be determined. Then, this prepolymer was dispersed in 6200 g of deionised water at a temperature of 50 °C. Viscosity was adjusted with further deionised water and the resin was cooled down to room temperature (25 °C). The resin thus obtained had a mass fraction of solids of 45.7 %, a dynamic viscosity of 1280 mPa·s, and an average particle size of 82 nm with a dispersity of 0.10.

### Example 10: Polyurethane Dispersion with Malonate and Acryloyl Functionality

1245 g of Ymer® N120, 3388 g of the malonate polyester polyol of Example 1a, 255 g of PC-diol, 467.5 g of PETIA, 408 g of di-TMPA3, 500 g of EOPO-PEA4, 595 g of di-TMPA4, 1.8 g of DBTL, and 8.1 g of butylhydroxytoluene were heated to 60 °C while purging with air. Over the course of two hours, 1293 g of IPDI were added and the temperature was maintained at 70 °C until a mass fraction of isocyanate groups in the reaction mixture of 0.7 % was reached. 430 g of methoxypropanol were then added, and the temperature was maintained for one further hour. Then, this prepolymer was dispersed in a mixture of 6300 g of deionised water and 95 g of diethanolamine at a temperature of 30 °C. Viscosity was adjusted by addition of further deionised water and the resin was cooled down to room temperature (25 °C). The resin obtained had a mass fraction of solids of 44.7 %, a dynamic viscosity of 1980 mPa·s, and an average particle size of 92 nm with a dispersity of 0.15.

### Example 11: Blend of Polyurethane Dispersion with Malonate Functionality and Acryloyl-Functional Polyurethane Dispersion

781 g of the resin dispersion of example 3 were blended at 25 °C with 626 g of Ucecoat® 7655 (a waterbased urethane acrylate with a mass fraction of solids of 35 %, and an acid value of 10 mg/g, based on the mass of the resin dispersion) and a specific amount of substance of carbon-carbon double bonds in the dispersion of 1.597 mol/kg ("double bond equivalent weight" of 626 g/mol, based on mass of the resin dispersion). The blending ratio was chosen such that a theoretic ratio *n*_{>C=C<} / *n*_{HA} of the amount of substance *n*_{>C=C<} of carbon-carbon double bonds to the amount of substance *n*_{HA} of acidic C-H-groups of 1 mol : 1 mol was achieved. The mixture was stirred for two hours and was used for formulation after one week of storage at room temperature (23 °C).

### Example 12: Formulation of Clearcoats

The components as listed in table 1 were mixed in the given sequence on a laboratory blender. If necessary the viscosity of the clearcoat was further reduced by the addition of deionised water. One hour after mixing all components the clearcoat was applied onto substrates (glass plates for pendulum hardness determination or steel panels with cured waterbased 2-pack epoxy primer for solvent resistance testing) with a lab applicator in a wet film thickness of 200 µm. After 30 min of flash-off the clearcoats were either cured at 23 °C/50 % relative humidity only (RT) or forced cured for 30 min at 80 °C or for 15 hours at 70 °C. The coated panels were stored at 23 °C/50 % relative humidity before further testing.

**Table 1 Composition of the Formulations**

| | Form1 | Form2 | Form3 | Form4 |
|---|---|---|---|---|
| Resin of Example 2 | 109.5 g | | | |
| Resin of Example 3 | | 130.2 g | | |
| Resin of Example 11 | | | 100 g | 100 g |
| Ucecoat® 7655 ¹ | 104.3 g | 104.3 g | | |
| NaOH, 10 % ² | 7.43 g | 7.43 g | 3.21 g | 3.21 g |
| Additol® VXW 6503N ³ | 1.67 g | 1.67 g | | |
| Additol® VXW 6211 ⁴ | 0.5 g | 0.5 g | | |
| TBAH, 10 % ⁵ | 13.32 g | 13.32 g | 4.83 g | |
| TBA-Bicarbonate, 50 % ⁶ | | | | 1.13 g |

| | | | | |
|---|---|---|---|---|
| ¹ waterbased urethane acrylate with a mass fraction of solids of 35 %, an acid value of 10 mg/g (based on the mass of the resin dispersion) and a specific amount of substance of >C=C< double bonds of 1.60 mol/kg (double bond equivalent weight of 626 g/mol, based on the mass of the resin dispersion), Allnex Belgium SA/NV ² sodium hydroxide solution in deionised water, mass fraction *w*_{NaOH} of dissolved NaOH in the solution is *m*_{NaOH} / *m*_{Sol} = 10 % ³ Silicone based substrate wetting additive, Allnex Austria GmbH ⁴ physiologically safe defoamer, Allnex Austria GmbH ⁵ tetrabutylammonium hydroxide solution in deionised water, mass fraction *w*_{Bu4NOH} of dissolved Bu₄N⁺ OH⁻ in the solution is *m*_{Bu4NOH} / *m*_{Sol} = 10 % ⁶ tetrabutylammonium bicarbonate solution in deionised water, mass fraction *w*_{Bu4N HCO3} of dissolved Bu₄N⁺HCO3⁻ in the solution is *m*_{Bu4N HCO3} / *m*_{Sol} = 50 % | | | | |

### Example 13: Application test - Polyurethane dispersion with malonate functionality and acryloyl-functional Polyurethane dispersion

Mechanical tests (pendulum hardness *H* according to the König method, stated as measured value in seconds, tested 24 hours after exposure to curing conditions as mentioned) and chemical resistance tests were made using the clear coating compositions of example 12. The results are listed in table 2.

**Table 2 Mechanical Test and Chemical Resistance Test for the Formulations**

| | Form1 | Form2 | Form3 | Form4 |
|---|---|---|---|---|
| König Hardness | | | | |
| curing for 1 d at 25 °C | 27 s | 20 s | 15 s | 16 s |
| curing for 30 min at 80 C | 47 s | 51 s | 34 s | 36 s |
| curing for 15 h at 70 °C | 155 s | 118 s | 129 s | 141 s |

| Solvent spot test for different curing conditions | | | | |
|---|---|---|---|---|
| curing for 1 d at 25 °C | | | | |
| Ethanol | 1.5 min | 2 min | 1 min | 1 min |
| Acetone | 1.5 min | 2 min | 1 min | 1 min |
| Xylene | 11 min | > 15 min | > 15 min | > 15 min |

| curing for 30 min at 80 °C | | | | |
|---|---|---|---|---|
| Ethanol | 3.5 min | 2 min | 1 min | 1 min |
| Acetone | 2.5 min | 2 min | 1 min | 1 min |
| Xylene | > 15 min | > 15 min | > 15 min | > 15 min |

| curing for 15 h at 70 °C | | | | |
|---|---|---|---|---|
| Ethanol | 11 min | 8 min | 6 min | 7 min |
| Acetone | 7.5 min | 8 min | 9.5 min | 12 min |
| Xylene | > 15 min | > 15 min | > 15 min | > 15 min |

### Example 14: Application test - Polyurethane Dispersion with Malonate and Acryloyl Functionality and Different Michael Addition Catalysts

Clear coat coating compositions of the formulations Form5 to Form8 were made according to table 3 using the resin of Example 8.

**Table 3 Constituents of formulations Form 5 to Form 8 and Results of Mechanical and Chemical Resistance Tests**

| | Form5 | Form6 | Form7 | Form8 | Form9 |
|---|---|---|---|---|---|
| Composition of the Formulations | | | | | |
| Resin of Example 8 | 50 g | 50 g | 50 g | 50 g | 50 g |
| NaOH, 10 % ¹ | | 0.25 g | 0.25 g | 0.25 g | 0.25 g |
| TBAH, 10 % ² | | 6.18 g | | | |
| DBU, 10 % ³ | | | 3.62 g | | |
| DABCO, 10 % ⁴ | | | | 2.67 g | |
| TBA-Bicarbonate 50 % ⁵ | | | | | 1.44 g |

| König Hardness after 24 h | | | | | |
|---|---|---|---|---|---|
| curing for 1 d at 25 °C | sticky | 12 s | sticky | sticky | 48 s |
| curing for 30 min at 80 °C | | 25 s | 8 s | sticky | 70 s |
| curing for 15 h at 70 °C | | 40 s | 13 s | 14 s | 74 s |

| König Hardness after 4 d | | | | | |
|---|---|---|---|---|---|
| curing for 1 d at 25 °C | sticky | 15 s | sticky | sticky | 66 s |
| curing for 30 min at 80 °C | | 27 s | 9 s | sticky | 76 s |
| curing for 15 h at 70 °C | | 41 s | | 13 s | 72 s |

| | | | | | |
|---|---|---|---|---|---|
| ¹ sodium hydroxide solution in deionised water, mass fraction *w*_{NaOH} of dissolved NaOH in the solution is *m*_{NaOH} / *m*_{Sol} = 10 % ² tetrabutylammonium hydroxide solution in deionised water, mass fraction *w*_{Bu4NOH} of dissolved Bu₄N⁺OH⁻ in the solution is *m*_{Bu4NOH} / *m*_{Sol} = 10 % ³ 1,8-diazabicyclo[5.4.0]undec-7-ene (DABU) solution in deionised water, mass fraction *w*_{DABU} of dissolved DABU in the solution is *m*_{DABU} / *m*_{Sol} = 10 % ⁴ diazabicyclo[2.2.2]octane (DABCO) solution in deionised water, mass fraction *w*_{DABCO} of dissolved DABCO in the solution is *m*_{DABCO} / *m*_{Sol} = 10 % ⁵ tetrabutylammonium bicarbonate solution in deionised water, mass fraction *w*_{Bu4N HCO3} of dissolved Bu₄N⁺HCO3⁻ in the solution is *m*_{Bu4N HCO3} / *m*_{Sol} = 50 % | | | | | |

### Example 15: Blocked Michael Addition Catalyst

94.21 g of diethylcarbonate were stirred in a glass flask at 23 °C while introducing 372.4 g of an aqueous tetrabutyl ammonium hydroxide solution with a mass fraction of 55 % in the solution, in a way that a reaction temperature of 30 °C was not exceeded. After that, further 533 g of deionised water were added. The final product had an amine value of 44 mg/g, based on the mass of the solution.

### Example 16: Application test - Polyurethane Dispersion with Malonate and Acryloyl Functionality and Different Michael Addition Catalysts

Clear coat coating compositions have been made using resins of examples 4 to 7 according to the recipes of table 4, and the test results for these are also collected in table 4.

**Table 4 Composition and Test Results for Formulations Form10 to Form18**

| | Form10 | Form11 | Form12 | Form13 | Form14 | Form15 | Form16 | Form17 | Form18 |
|---|---|---|---|---|---|---|---|---|---|
| Composition of the Formulations | | | | | | | | | |
| Resin of Ex. 4 | 50 g | | | | 50 g | | | | |
| Resin of Ex. 5 | | 50 g | | | | 50 g | | | |
| Resin of Ex. 6 | | | 50 g | | | | 50 g | | |
| Resin of Ex. 7 | | | | 50 g | | | | 50 g | 50 g |
| NaOH ¹ | | | | | 0.25 g | 0.18 g | 0.25 g | 0.11 g | |
| TBAHCO3 ² | | | | | 1.42 g | 1.73 g | 1.4 g | 1.51 g | |
| Catalyst ³ | | | | | | | | | 3.15 g |

| König Hardness after 24 h, for curing conditions as specified | | | | | | | | | |
|---|---|---|---|---|---|---|---|---|---|
| 1 d at 25 °C | sticky | sticky | sticky | sticky | 66 s | 54 s | 61 s | 63 s | 65 s |
| 30 min at 80 °C | | | | | 93 s | 73 s | 75 s | 91 s | 94 s |
| 15 h at 70 °C | | | | | 101s | 86 s | 87s | 103 s | 105 s |

| Solvent resistance after 30 min at 80 C forced cure | | | | | | | | | |
|---|---|---|---|---|---|---|---|---|---|
| Ethanol | | | | | 11 min | 4.5 min | 4 min | 28 min | 30 min |
| Acetone | | | | | 3 min | 1 min | 1 min | 4 min | 4 min |
| Xylene | | | | | 19 min | 14 min | 6.5 min | 30 min | 30 min |

| | | | | | | | | | |
|---|---|---|---|---|---|---|---|---|---|
| ¹ sodium hydroxide solution in deionised water, mass fraction *w*_{NaOH} of dissolved NaOH in the solution is *m*_{NaOH} / *m*_{Sol} = 10 % ² tetrabutylammonium bicarbonate solution in deionised water, mass fraction *w*_{Bu4N HCO3} of dissolved Bu₄N⁺HCO₃⁻ in the solution is *m*_{Bu4N HCO3} / *m*_{Sol} = 50 % ³ blocked catalyst of Example 15, the mass 3.15 g of blocked catalyst solution in Form18 contains the same amount of substance of Bu₄N⁺ as 1.51 g of TBAHCO3 solution of Form17 | | | | | | | | | |

### Example 17: White Topcoat Based on Polyurethane Dispersion with Malonate and Acryloyl Functionality

A grinding formulation was mixed according to the following recipe of table 5, and ground in a bead mill:

**Table 5 Composition of Grinding Resin**

| | |
|---|---|
| Resin of Example 9 | 52.58 g |
| Additol® VXW 6208 ¹ | 3.78 g |
| Kronos® 2310 ² | 72.5 g |
| Additol® VXW 6211 ³ | 0.15 g |
| Sum | 129.01 g |

| | |
|---|---|
| ¹ aqueous dispersing additive, non-ionically modified acrylic polymer, Allnex Austria GmbH ² white pigment based on TiO₂ (rutile), Kronos International ³ physiologically safe defoamer, Allnex Austria GmbH | |

This grinding formulation was let down with further 149 g of the resin from Example 9. To this lacquer the catalyst package (0.32 g of an aqueous sodium hydroxide solution having a mass fraction of dissolved NaOH of 10 %, 5.5 g of an aqueous solution of tetrabutylammonium bicarbonate solution having a mass fraction of dissolved salt of 50 %) was added. This coating was applied onto glass plates and steel panels coated with a cured water-based 2-pack epoxy primer in a wet film thickness of 200 µm, the first set a samples one hour after mixing in the catalyst, and the second set of samples seventy-two hours after mixing in the catalyst. After thirty minutes of flash-off, the clearcoats were either cured at room temperature (23 °C) and 50 % of relative humidity ("RT cure"), or forced cured for 30 min at 80 °C ("forced cure"). The coated panels were stored after curing as indicated in the table, at 23 °C and 50 % of relative humidity before further testing. The test results are collected in the following table 6.

**Table 6 Test Data**

| Application after: | 1 h potlife | 72 h potlife |
|---|---|---|
| König Hardness after 24 h | | |
| RT cure | 65 s | 62 s |
| forced cure | 89 s | 77 s |

| Hardness after 4 d | | |
|---|---|---|
| RT cure | 80 s | 72 s |
| forced cure | 90 s | 83 s |

| Cross cut after 4 days (Topcoat on EP primer) | | |
|---|---|---|
| RT cure | 0 | 0 |
| forced cure | 0 | 0 |

| Colour and gloss values | | |
|---|---|---|
| L | 9678 | 9683 |
| a | -63 | -71 |
| b | 99 | 104 |
| 20° | 912 | 931 |
| 60° | 939 | 908 |

### Example 18: Hydrophilic Modification of the Polyurethane

18.1: 150 g (143 mmol) of the polyester polyol from Example 1a were mixed with 42 g (42 mmol) of Ymer® N120 and heated to 60 °C. Then, 57 g (233 mmol) of TMXDI, and 24 g (108 mmol) of IPDI were added to this mixture and the temperature was kept below 65 °C for one hour. 30 g of dipropyleneglycol-dimethylether were then added. The temperature of the reaction mixture was further increased to 80 °C and maintained until a mass fraction of isocyanate groups of 5.5 % was reached in the prepolymer so obtained. In a second vessel, 300 g of deionised water and 34.1 g of diethanolamine were heated to 30 °C and the urethane prepolymer was added while stirring at 200 min⁻¹. A polyurethane dispersion was obtained which was cooled down to room temperature (23 °C). The resin dispersion had a mass fraction of solids of 48.8 %, a dynamic viscosity of 1540 mPa·s and an average particle size of 164 nm with a dispersity of 0.31. In theory the resin had a specific amount of substance of CH-acidic hydrogen atoms of 3.115 mol/kg, based on the mass of solids ("equivalent weight of acidic hydrogen" of 321g/mol).
18.2: In a second run, 42 g of Ymer® N120 were replaced by 5.6 g of dimethylolpropionic acid. It was found that the dimethylolpropionic acid did not dissolve completely in the reaction mixture. The resulting dispersion was neutralised by addition of aqueous sodium hydroxide solution in an amount to neutralise 50 % of the acid groups introduced by dimethylolpropionic acid. Addition of N-methylpyrrolidone or N-ethylpyrrolidone helped to dissolve the acid in the first steps of the reaction, but the presence of these solvents was not desired.
18.3: In a third run, the mass of Ymer® N120 was reduced from 42 g to 28 g, and 1.9 g of dimethylolpropionic acid were dispersed under gentle heating in the Ymer® N120. The mixture was added to the polyester polyol, and both were heated to 60 °C under stirring. No undissolved dimethylolpropionic acid was found after thirty minutes. The reaction was then continued by addition of the isocyanates as described in 17.1. The resulting dispersion was neutralised by addition of aqueous sodium hydroxide solution in an amount to neutralise 50 % of the acid groups introduced by dimethylolpropionic acid. The polyurethane dispersion obtained was cooled down to room temperature (23 °C), and showed no lack of stability.

### Example 19 Chain-Extended Polyurethane Dispersion with Malonate Functionality

In a variant of Example 2, diethanolamine was replaced by 2-methyl-1,5-pentanediamine. A chain-extended polyurethane dispersion was obtained.

### Example 20 Synthesis of a Malonate Polyester with Co-Emulsified Michael Donor

800.9 g of diethylmalonate, 960.4 g of TCD-alcohol, 555.6 g of Ymer N120 and 0.35 g of MBTO were mixed and heated to 175 °C during the course of two hours while ethanol was distilled off entirely. The reaction mixture was maintained at that temperature until a resin was obtained with a mass fraction of solids of 99.0 % and a mass average molar mass *M*ₘ of 3924 g/mol, as determined by GPC. 186 g of this polyester were mixed with 87.75 g of di-TMPA3 at 70 °C. This mixture was dispersed into 224 g of water. Viscosity was adjusted by addition of further 16.5 g of water to a dynamic viscosity of 1870 mPa·s, the mass fraction of solids was then 52.7 %.

### Example 21 Synthesis of a Malonate Polyester with Co-Emulsified Michael Donor

800.9 g of diethylmalonate, 980 g of TCD-alcohol, 926 g of Ymer® N120, and 0.35 g of MBTO were mixed and heated to 175 °C during the course of two hours while ethanol was distilled off entirely. The reaction mixture was maintained at that temperature until a resin was obtained having a mass fraction of solids of 98.0 %, and a mass average molar mass *M*ₘ of 3378 g/mol. 225 g of this polyester were mixed with 87.75 g of di-TMPA3 at 70 °C. This mixture was dispersed into 255 g of deionised water; viscosity was adjusted by addition of further 28 g of deionised water to obtain a dynamic viscosity of 2167 mPa·s and a mass fraction of solids of 52.1%.

### Example 22 Nonionic/anionic Polyurethane Dispersion with Malonate and Acryloyl Functionality

3388 g of the malonate polyester polyol of Example 1a, 200 g of dimethylolpropionic acid and 430 g of dipropyleneglycol dimethylether were heated to 60 °C. 1487 g of IPDI were added and the temperature was further increased to 100 °C to achieve a mass fraction of isocyanate groups in the reaction mixture of 3.5 %. Then, 8.1 g of butylhydroxytoluene, 467.5 g of PETIA, 408 g of di-TMPA3, 500 g of EOPO-PEA4, and 595 g di-TMPA4 were added while reducing the temperature to 70 °C until a mass fraction of isocyanate groups in the reaction mixture of 0.8 % was reached. 430 g of methoxypropanol were then added, and the temperature was maintained for one further hour. Then, this prepolymer was dispersed in a mixture of 6300 g of deionised water, 81 g of diethanolamine, and 120 g of an aqueous sodium hydroxide solution with a mass fraction of solids of 50 %, at a temperature of 30 °C. Viscosity was adjusted by addition of further deionised water and the resin cooled down to room temperature. The final resin had a mass fraction of solids of 34.8%, a dynamic viscosity of 700 mPa·s, and an average particle size of 60 nm with a dispersity of 0.37.

### Example 23 Hardness Development and Solvent Resistance

Clear coat coating compositions have been made using the binder resins of examples 20, 21, and 22, according to the recipes in table 7. The test results are collected in the same table.

**Table 7 Composition of Clearcoat Coating Mixtures (Mass of Ingredients in g) and Test Results for Hardness Development and Solvent Resistance**

| Ingredients | Form19 | Form20 | Form21 | Form22 |
|---|---|---|---|---|
| Resin of Example 20 | 50 g | | | |
| Resin of Example 21 | | 50 g | | |
| Resin of Example 22 | | | 50 g | 50 g |
| | | | | |
| Catalyst from Example 15 | 3.28 g | 3.32 g | 2.19 g | 1.38 g |

| König hardness measured 24 h after curing as specified | | | | |
|---|---|---|---|---|
| 1 day at 25 °C | 26 s | 75 s | tacky | 22 s |
| 30 min at 60 °C | 30 s | 76 s | tacky | 66 s |
| 30 min at 80 °C | 34 s | 108 s | 82 s | 98 s |

| König hardness measured 7 days after curing as specified | | | | |
|---|---|---|---|---|
| 1 day at 25 °C | 29 s | 116 s | 47 s | 73 s |
| 30 min at 60 °C | 30 s | 120 s | 65 s | 101 s |
| 30 min at 80 °C | 34 s | 130 s | 84 s | 100 s |

| Solvent Resistance measured 7 days after curing at 25 C for 1 day | | | | |
|---|---|---|---|---|
| Ethanol | 2 min | 5 min | n.d.* | n.d. |
| Acetone | 1 min | 2 min | n.d. | n.d. |

| | | | | |
|---|---|---|---|---|
| * Not determined | | | | |

Hardness development and solvent resistance show that a lower amount of the non-ionic hydrophilic modifier Ymer® N 120 (Form20; binder resin for Example 21) leads to better hardness and better solvent resistance than a higher amount of that modifier (Form19, binder resin of Example 20). Comparison of formulations Form21 and Form22 shows that the binder resin of Example 22 requires a higher amount of catalyst in order to achieve good hardness development, particularly at ambient temperature. This is most probably due to the fact that the acid functionality of this binder resin interferes with basic catalysis of the Michael addition crosslinking.

### Example 24 Formulation of Clearcoat Coating Compositions For Combined Radiation and Thermal Curing

The components listed in table 8 were mixed in the given sequence in a lab blender. If necessary the viscosity of the coating composition was further reduced by the addition of deionised water. One hour after mixing, the clearcoat coating compositions were applied onto substrates (glass plates for pendulum hardness determination) with a lab applicator in a wet film thickness of 200 µm. After 30 min of flash-off at room temperature (23 °C) and 15 minutes stoving at 60 °C, the coating compositions were either cured by UV radiation (800 mJ/cm², Hg lamp) and/or thermally at 23 °C and 50 % relative humidity only, or forced cured for thirty minutes at 80 °C, or for fifteen hours at 70 °C. The sample that was thermally cured for thirty minutes at 80 °C was as well UV cured after thermal crosslinking, to investigate the feasibility of this process. The coated panels were stored at 23 °C and 50 % relative humidity for 24 h before further testing.

**Table 8 Composition and Test Results of Formulations**

| Ingredients | Form23 | | Form24 | |
|---|---|---|---|---|
| Resin of Example 10 | 100 g | | 50 g | |
| UCECOAT® 7738 ¹ | | | 50 g | |
| Additol® VXW 6503 N ² | 0.3 g | | 0.3 g | |
| Onmirad® 1173 ³ | 1.5 g | | 1.5 g | |
| Catalyst of Example 15 | 5.4 g | | 5.4 g | |
| | | | | |
| Curing | UV (+ thermal) | Thermal (+UV) | UV (+ thermal) | Thermal (+UV) |
| | 30 min \| RT + 15 min \| 60 °C | 30 min \| RT + 15 min \| 60 °C | 30 min \| RT + 15 min \| 60 °C | 30 min \| RT + 15 min \| 60 °C |
| | tack free | tack free | slightly tacky | slightly tacky |
| König hardness | 25 s | 24 s | 16 s | 14 s |
| | after UV | | after UV | |
| König hardness | 55 s | | 86 s | |
| | After further 7 days at RT | After further 7 days at RT | After further 7 days at RT | After further 7 days at RT |
| | 66 s | 61 s | 95 s | 36 s |
| | 30 min \| RT + 15 min \| 60 °C + UV + 30 min 80 °C | 30 min \| RT + 15 min \| 60 °C + 30 min 80 °C | 30 min \| RT + 15 min \| 60 °C + UV + 30 min 80 °C | 30 min \| RT + 15 min \| 60 °C + 30 min 80 °C |
| König hardness | 66 s | 60 s | 84 s | 47 s |
| | | + UV | | + UV |
| König hardness | | 68 s | | 86 s |
| | 30 min \| RT + 15 min \| 60 °C + UV + 15 h 70 °C | 30 min \| RT + 15 min \| 60 °C + 15 h 70 °C | 30 min \| RT + 15 min \| 60 °C + UV + 15 h 70 °C | 30 min \| RT + 15 min \| 60 °C + 15 h 70 °C |
| König hardness | 80 s | 77s | 90 s | 82 s |

| | | | | |
|---|---|---|---|---|
| 1 Ucecoat 7738 is a nonionically stabilised waterbased urethane acrylate with a mass fraction of solids of 38 %, an acid value of 0.9 mg/g (based on the mass of the resin dispersion) and a specific amount of substance of >C=C< double bonds of 2.4 mol/kg (based on the mass of the resin), Allnex Belgium SA/NV 2 see table 1 3 Omnirad 1173 is a photoinitiator made from 2-hydroxy-2-methyl-1-phenylpropanone (IGM Resins B.V., Waalwijk) | | | | |

These experiments show that the binder system can be cured thermally as well as also by radiation with UV light if a photoinitiator is added to the formulation. The efficiency of photo induced cure can be enhanced when the total amount of reactive double bonds based on binder solids is increased (e.g. by adding a resin with a high specific amount of substance of >C=C< double bonds to the formulation). There is no significant difference between the final curing result regardless if the sequence of cure is "thermal cure followed by UV cure" or "UV cure followed by thermal cure". This makes this binder system particularly interesting for dual-cure applications.

## Claims

1. An aqueous polymer dispersion wherein the dispersed polymer **U** comprises Michael donor groups, and is
- an externally emulsified polymer **UE** which preferably comprises in its polymer chain, ester groups or urethane groups, or both, as parts of the repeating units, and preferably has a number average molar mass of at least 500 g/mol, wherein the dispersion comprises at least one emulsifier which is a non-ionic emulsifier or an anionic emulsifier, or a combination of at least one non-ionic emulsifier and at least one anionic emulsifier,
or
- a self-emulsifying polymer **US** which preferably comprises in its polymer chain, ester groups or urethane groups, or both, as parts of the repeating units, and further preferably has a number average molar mass of at least 500 g/mol, and incorporated moieties that have pending hydrophilic groups, or hydrophilic groups which form part of the polymer chain,
wherein the Michael donor groups are acidic C-H groups from activated methylene and/or methine groups, wherein the polymer **U,** i.e., any one of **UE** and **US,** comprises, on average, at least two acidic C-H groups per molecule, and wherein the specific amount of substance of acidic C-H groups in the polymer **U** is preferably at least 0.5 mol/kg.

2. The aqueous polymer dispersion as claimed in claim 1 wherein the dispersed polymer **U** is an externally emulsified polymer **UE** which is a polymer wherein the linking groups are ester bonds -C(O)-O- or urethane bonds -O-C(O)-NH-, and which comprises, in its polymer chain,
- moieties derived from a monomeric, oligomeric, or polymeric hydroxy-functional component **B** having at least one acidic C-H group, and
- moieties derived from a monomeric, oligomeric, or polymeric component **D** which is either an acid-functional component **Da,** or an isocyanate-functional component **Di** of
wherein moieties of the hydroxy-functional component **B** are present in the polymer in such amount that the specific amount of substance of acidic C-H groups in the polymer **UE** is at least 0.5 mol/kg.

3. The aqueous polymer dispersion as claimed in claim 1 wherein the dispersed polymer **U** is a self-emulsifying polymer **US** which has incorporated moieties that have pending hydrophilic groups, or hydrophilic groups which form part of the polymer main chain, and which is a polymer wherein the linking groups are ester bonds -C(O)-O- or urethane bonds - O-C(O)-NH-, and which comprises, in its polymer chain,
- moieties derived from a hydroxy-functional component **A** having at least one hydroxy-functional group and at least one hydrophilic group,
- moieties derived from a monomeric, oligomeric, or polymeric, hydroxy-functional component **B** having acidic C-H groups, and
- moieties derived from a monomeric, oligomeric, or polymeric, at least difunctional component **D** that reacts with hydroxyl groups of component **B** and the hydroxyl groups of component **A** under formation of a polymer wherein the linking groups are ester bonds -C(O)-O- or urethane bonds -O-C(O)-NH-,
wherein moieties of the hydroxy-functional component **B** are present in the polymer in such amount that the specific amount of substance of acidic C-H groups in the polymer **US** is at least 0.5 mol/kg.

4. The aqueous polymer dispersion of any one of claims 2 and 3, wherein the polymeric hydroxy-functional component **B** is selected from the group consisting of
- a polyesterpolyol **B1** comprising malonate moieties, calculated as -CO-CH₂-CO- with a molar mass of 70.05 g/mol, in a mass fraction of at least 15 %,
- a polyether polyol **B21** or a polyester polyol **B22** having repeating units derived from multifunctional hydroxy compounds **B3** having at least three hydroxyl groups per molecule, at least one of which having been reacted to form an ester of a beta-keto acid, preferably acetoacetic acid, or an ester of an aliphatic acid having an electron-withdrawing group in beta-position to the carboxylic acid group, preferably cyanoacetic acid, and
- a polyamide polyol **B4** comprising groups derived from acetoacetamide, and
- mixtures of two or more of **B1, B21, B22,** and **B4.**

5. The aqueous polymer dispersion of any of claims 2, 3, and 4 wherein the monomeric, oligomeric, or polymeric at least difunctional component **D** is
- a monomeric, oligomeric, or polymeric isocyanate **Di** having at least two isocyanate groups per molecule, or
- a monomeric, oligomeric or polymeric acid **Da,** or reactive derivative thereof, having at least two acid groups, or reactive derivatives thereof, per molecule.

6. The aqueous polymer dispersion of claim 1 wherein the polymer **U** is a polyester **BM** made from an at least difunctional monomeric compound **Bm** having at least one Michael donor group wherein the Michael donor groups are acidic C-H groups from activated methylene and/or methine groups, and a hydroxy-functional monomeric, oligomeric, or polymeric compound **Dh = Bh** having at least two hydroxyl groups that react with the at least two functional groups of **Bm** under polycondensation or polyaddition to form a polyester.

7. The aqueous polymer dispersion of claim 6 wherein the polymer **U** is a self-emulsifying polymer **US,** and a hydroxy-functional component **A** having at least one hydroxy-functional group and at least one hydrophilic group is also present in the polycondensation reaction or polyaddition reaction to form the self-emulsifying polymer **US.**

8. The aqueous polymer dispersion of any one of claims 1 to 5 wherein the polymer **U** is a polyurethane **UU,** and the at least difunctional component **D** is a diisocyanate **Di2** or a multifunctional isocyanate **Di3** having at least three isocyanate groups per molecule, or a combination of **Di2** and **Di3.**

9. The aqueous polymer dispersion of any one of claims 3 to 5 and 7 to 8, wherein the hydroxy-functional hydrophilic component **A** is selected from the group consisting of
- a component **Aa** which has at least one, preferably two, hydroxyl groups and an acid group, which is preferably sterically hindered, or
- a component **An1** which is a monoalkylether of a polyoxyalkylene glycol having from one to four carbon atoms in the alkyl group, and from two to four carbon atoms in the alkylene group which is linear or branched, preferably two carbon atoms in the alkylene group, and where the polyoxyalkylene group is bound by an ether bond to
- a dihydric alcohol, to yield a component **An11,** or
- an at least trihydric alcohol, preferably a trihydric alcohol, to yield a component **An12,** or
- a polyoxyalkylene glycol **An2** having two hydroxyl groups, wherein the alkylene group is linear or branched and has from two to four carbon atoms in the alkylene group, preferably two carbon atoms in the alkylene group, or
- a mixture of at least two of **Aa, An11, An12,** and **An2,** preferably of **Aa** and **An12**

10. The aqueous polymer dispersion of claim 8 or 9 wherein in the synthesis of the polyurethane **UU,** at least one of polyesterpolyols **BE** and polycarbonatepolyols **BC** are used together with **A** and **B** in the reaction with the isocyanate components **Di2** and/or **Di3.**

11. The aqueous polymer dispersion of claim 10 wherein in the synthesis of the polyurethane **UU,** low molar mass hydroxy-functional aliphatic compounds **B"h** having a molar mass of less than 500 g/mol and at least two hydroxyl groups per molecule are used together with **A** and **B** and optionally, **BE** and/or **BC,** in the reaction with the isocyanate components **Di2** and/or **Di3.**

12. The aqueous polymer dispersion of claim 1 which additionally comprises Michael acceptor groups, wherein
- Michael acceptor groups are chemically bound to the backbone of the polymer **U** by using a further constituent **E** in the synthesis of the polymer **U** which has at least one, preferably two, hydroxyl groups, and at least one activated olefinically unsaturated group, or
- Michael acceptor groups are chemically bound to a carrier compound different from the polymer **U,** preferably to an oligomeric or polymeric carrier compound which is co-emulsified in the polymer dispersion, or
- Michael acceptor groups are chemically bound to the backbone of the polymer **U** and also chemically bound to a carrier compound different from the polymer **U.**

13. A process to cross-link the aqueous polymer dispersion of claim 1 by adding thereto a Michael acceptor, and a catalyst to promote the Michael addition reaction, wherein the ratio *n*(C-H) / *n*(>C=C<) of the amount of substance *n*(C-H) of activated acidic protons C-H in the Michael donor component to the amount of substance *n*(>C=C<) of activated unsaturated groups >C=C< in the Michael acceptor component is between 10 mol/mol and 0.1 mol/mol.

14. A process to cross-link the polymer dispersion of claim 12 by adding thereto a catalyst to promote the Michael addition reaction.

15. The process of claim 13 or of claim 14 wherein the catalyst is a latent base catalyst which is blocked as a carbonate and/or a carbamate salt.

16. A coating composition comprising the aqueous polymer dispersion of claim 12 and a latent base catalyst which is blocked as a carbonate and/or a carbamate salt.

17. The coating composition of claim 16 additionally comprising one or more of photoinitiators, pigments, fillers, dispersants, antisettling agents, sag control agents, light or UV stabilisers, flow modifiers, levelling agents, thickeners, defoamers, wetting agents, surfactants, adhesion promoting agents, coalescence agents, corrosion inhibitors, matting agents, flame retardants, slip additives, anti-stain additives, and anti-graffiti additives.

18. A coated substrate which has been coated with a coating composition comprising the aqueous dispersion of claim 1 or of claim 11 or of claim 12, or the coating composition of claim 16 or of claim 17, and wherein the coating composition has been cross-linked by the process of any one of claims 13, 12, and 15.

19. A coated substrate which has been coated with a coating composition comprising the aqueous dispersion of claim 17, and wherein the coating composition has been cross-linked by the process of any one of claims 13, 12, and 15, and additionally, by exposure to actinic radiation, and wherein the aqueous dispersion of claim 17 contains a photoinitiator if UV light is chosen as source of actinic radiation.
